# EUROPEAN PATENT SPECIFICATION

(11) **EP 1 839 453 B1**
(45) Date of publication and mention of the grant of the patent: **11.02.2009**
(21) Application number: 06814599.4
(22) Date of filing: 14.09.2006
(51) Int. Cl.: H04W 4/00

(54) **SESSION-BASED MULTIMEDIA MESSAGING SERVICE**
SITZUNGSBASIERTER MULTIMEDIA-NACHRICHTENÜBERMITTLUNGSDIENST
SERVICE DE MESSAGERIE MULTIMEDIA BASE SUR DES SESSIONS

(30) Priority: 14.09.2005 US 717109 P
(43) Date of publication of application: 03.10.2007
(60) Divisional application: 08161307.7
(73) Proprietor: Roamware, Inc., San Jose, CA 95128 (US)
(72) Inventor: JUANG, John Yue Jun, Danville, California 94506 (US)
(74) Representative: Wallis, Helen Frances Mary
(86) International application number: PCT/US2006/035690
(87) International publication number: WO 2007/033259

(56) References cited:
- EP-A- 1 530 380
- WO-A1-01/22750
- WO-A1-20/04081802
- WO-A2-02/19667
- US-A- 5 987 323
- US-A1- 2003 144 015
- "3rd Generation Partnership Project; Technical Specification Group Core Network and Terminals; Multimedia Messaging Service (MMS); Functional description; STage 2 (Release 6)" 3GPP TS 23.140 V6.10.0 (2005-06), [Online] 1 June 2005 (2005-06-01), pages 1-214, XP002473514 Retrieved from the Internet: URL:http://www.3gpp.org/ftp/Specs/html-inf o/23140.htm> [retrieved on 2008-03-19]

## Description

### Related Application

This application claims priority from United States Provisional Patent Application Serial No. 60/717,109 entitled "Voice SMS and Video SMS", filed September 14, 2005. This Application is also related to U.S. Application No. 11/374,427 filed March 14, 2006, which claims priority from Provisional Application no. 60/662,031 filed March 14, 2005. This application also is related to the following Applications: U.S. Application No. 11/374,437 filed March 14, 2006, which claims priority from Provisional Application No. 60/662,030 filed March 14, 2005; U.S. Application No. 11/375,577 filed March 15, 2006, which claims priority from Provisional Application 60/662,028 filed March 15, 2005; U.S. Application No. 11/402,128 filed April 12, 2006, which claims priority from Provisional application No. 60/670,917 filed April 12, 2005; and U.S. Application No. 10/635,804 filed August 5, 2003, now U.S. patent No. 7,072,651, which claims priority from Provisional Application No. 60/401,362 filed August 5, 2002.

### BACKGROUND

### Field of the Invention

The present invention relates generally to transmission of information over an electronic network, and more specifically, to a session-based multimedia messaging service, with message alerts in a visual user interface.

### Background of the Invention

A Short Messaging Service (SMS) message is one of the most popular means of mobile communication as it is quick, inexpensive and less intrusive than a telephone call. SMS messages may be text messages, voice messages or video messages.

A voice SMS message allows a sender to send a voice message to a recipient without talking to the recipient. The sender dials the recipient's number with a prefix, for example, a * sign, prefix or otherwise specifies that she desires to send a voice sms message. The call is then routed to a voice SMS system, which can include an Interactive Voice Response (IVR) front end of a voice SMS system. The sender leaves a voice SMS message in the voice SMS system and hangs up the call.

The voice SMS system sends the recipient an SMS alert to inform the recipient that a voice SMS message is received. The sender's name, phone number or other identification of the sender is indicated by the alert . The recipient may then return a call on the voice SMS message to directly listen to the sender's voice SMS message. Alternatively, the recipient may be called by the voice SMS system to listen to the voice SMS message once the recipient answers the call. If the recipient wishes to reply to the voice SMS message, he may press an operator-defined numeric key and leave a voice SMS message in the voice SMS system for the sender, and hang up the call. The sender, in turn, will receive an SMS alert, and, if he so desires, he may listen to the voice SMS message.

The voice SMS message is thus "talk" for the sender and "listen" for the recipient unlike text SMS message which is "type" for the sender and "read" for the recipient. The voice SMS message is not "push-to-talk" but "pull-to-listen" as the recipient has to retrieve the voice SMS message or answer the call before listening to the voice SMS message. On the contrary, in "push-to-talk" the recipient can immediately hear the voice SMS message received from the sender without answering the call.

A voice SMS message also differs from "push-to-talk" in other aspects. The sender's handset and the recipient's handset should support "push-to-talk" in addition to data connection subscription. Further, "push-to-talk" suffers from drawbacks such as poor quality of service and high latency. In contrast, the voice SMS message is completely handset and radio technology (CDMA, GSM etc) independent. Moreover, unlike text SMS message, it is language independent and can be used by any section of people, irrespective of the language that they use to communicate.

In various known voice SMS services, charging of the voice SMS message is event-based irrespective of the duration of the voice SMS message. It is generally charged at the rate of a premium SMS since it can be packed for more than 160 characters. Therefore, the voice SMS message might target SMS users to canalize SMS revenue and potentially generate greater profits than voice calls. Research shows that one-on-one messaging often results in voice calls.

One known technology for the delivery of messages with voice content is Multimedia Messaging Service (MMS). The voice SMS message differs from MMS messaging in two key aspects. First, voice SMS messaging does not require an MMS/GPRS capable handset, an MMS/GPRS subscription or an MMS/GPRS capable network. For voice SMS messaging, the handsets of the sender and the recipient may be ordinary handsets with basic voice and SMS services. Second, voice SMS messaging has a much simpler interface than MMS since most users know how to dial a number and talk. On the other hand, many users do not know how to compose a picture MMS message along with a voice MMS message. Further, the MMS messages also have size limitations as different MMS handsets may support different sizes. However, in case of voice SMS message since the voice SMS message is stored on the network server, there is no inherent limitation on the duration or size of a voice SMS message except if it is enforced by an operator.

Another known technology for delivery of messages with voice content is voicemail. The voice SMS messaging also differs from a voicemail in three key aspects. The voice SMS messaging does not require the sender to call the recipient before leaving a voice SMS message. Moreover, the recipient can directly retrieve the voice SMS message without going through a voicemail system menu and a sequential order of previously received voice SMS messages in order to get to the sender's voice SMS message. Further, the recipient can immediately reply to the voice SMS message while he is listening to the voice SMS message by pressing a key.

Yet another known technology for delivery of messages with voice content is voice messaging. An example of voice messaging system includes a sender dialing another number of a recipient rather than the recipient's normal phone number to leave a voice SMS message directly. Another example includes a sender dialing in a common number or an IVR system to enter a recipient's phone number to leave a voice SMS message. Voice SMS messaging differs from voice messaging in three key aspects. First, the recipient of the voice SMS message receives an identity of the sender of the voice SMS message, as opposed to voice messaging systems that provide a notification of received messages without disclosing details of the sender. Second, the recipient can directly retrieve the desired voice SMS message without going through a voice messaging system menu and a sequential order of previously received voice SMS messages. Third, the recipient can immediately reply to the voice SMS message while he is listening to the voice SMS message with the touch of a key.

Different vendors of voice SMS services provide different user interfaces for the voice SMS service. One vendor involves a speech recognition interface to facilitate voice SMS service. Further, it maintains a phone book on a network side to create groups for voice chat and broadcasting on the network side. Another vendor relies on a special handset client. To leave a voice SMS message, the sender uses the client to select a recipient's number from the phone book. Yet another vendor uses MMS for installing voice SMS service in a special handset. If the recipient also uses the special handset, the voice SMS message can be downloaded by the recipient for offline listening. But if the recipient uses a regular handset, a SMS alert for call-back is sent. Another vendor offers speech to text or text to speech service along with system dial-out facility to the recipient using a handset phone book. For a regular handset, all these systems use a short code (example "*+*") to dial into an IVR system to listen to the voice SMS messages.

However, all the aforesaid vendor-specific voice SMS services have a common drawback - message notification overload. Namely, SMS notifications typically appear on handsets on a flat chronological list, wherein the list can only contain a limited number of items. Because of the "ping-pong" manner of typical voice SMS communications, state-of-the art voice SMS systems suffer from at least two drawbacks. First, that limit is quickly reached, and the recipient soon is deprived of the opportunity to view or interact with even relatively recent voice-SMS notifications. Second, because the SMS message notification list is only hierarchical, it becomes difficult to distinguish between the notifications by sender, subject or other criteria, in order for the user to select one to respond to or act upon.

Namely, in state-of-the art voice SMS systems, each time a voice SMS message is sent by the sender, a SMS alert is sent to the recipient. When the sender and the recipient send voice SMS messages to each other in a ping-pong manner, a new SMS alert for each voice SMS message is forwarded to the handset of the sender/recipient. This causes an overflow of SMS alerts in the handset of the sender and the recipient and gives rise to significant confusion when retrieving a desired voice SMS message. Further, retrieval of previous voice SMS messages within the same thread is not possible in the existing vendor-specific voice SMS services.

Apart from known technologies for delivering messages with voice content, few technologies facilitating video message services, for example, MMS for video messaging, are known in the art. These services have a difficult user interface and require offline recording of the video message followed by a long upload time. Moreover, while most 3 G subscribers know how to dial a video call and video talk, but only few people know how to compose a picture MMS along a MMS video message.

Another video message service known in the art is video mail. In this service, the sender calls the recipient with a video call to forward a video mail. Further, to view the video mail, the recipient has to go through the video mail menu to sequentially view video messages. Yet another known video message service is direct video mail deposit. Although the service is not intrusive, it requires the recipient to go through the video mail menu to sequentially view the video messages.

Thus, there is a foregoing need to devise a solution addressing the problems existing in the art and facilitating streamlined storage of multimedia messages for future retrieval in a manner that conveniently categorizes messages by time, sender, recipient, location, subject or any of a plurality of criteria in addition to just time and recipient. Further, there is a need for a solution to address the problem of multiple SMS alerts and enable transmission of multimedia messages for 3 G networks and handsets in the roaming scenario as well as HPMN network. The solution should permit the user to select a multimedia message notification for response based on more than one criterion. Also, there is a need for the solution to facilitate simple and real time recording of multimedia messages, and a need to facilitiate the convenient sending of multimedia messages to multiple recipients, ideally by using a predefined "phonebook" or recipient address storage at the handset or sending device.
The Third Generation Partnership Project technical specification group core network and terminals multi media messaging service functional description stage 2 (3GPPTS23.140V6.10.0(2005-06)) describes the core functions for a non-real time multi media messaging service which uses existing protocols and existing message formats to realise the service requirements.

### SUMMARY OF THE INVENTION

The present invention relates to a method and a system for delivering at least one multimedia message from a sender to at least one recipient in a session- based multimedia messaging system. The session-based multimedia messaging system includes a session-based storage system for storing the multimedia messages in a session identified in a send-request received by a reception logic. The session-based multimedia messaging system further includes a notification logic for sending a SMS alert of the multimedia message to at least one recipient. The SMS alert sent by the notification logic overwrites previous SMS alerts corresponding to the same sender and the recipient of the same type of multimedia messages (for example, voice type or video type), if any, present in a handset.

A session is collection or history of message notifications that start with an original message, and then is configured to include responses back and forth between sender and recipient. In that way, a session is like an e-mail thread as is known in the art of internet email, or a message-thread as is known in the art of internet newsgroups. In a preferred embodiment, indicating session at a sending device like the handset permits senders and recipients to select the correct multimedia messaging "conversation" or "thread" to respond to or participate in. Any sender can initiate a new session either by initiating a sua sponte multimedia message, rather than replying to a previously received one, or otherwise by indicating the start of a new "conversation" or session of sent and replied multimedia sessions. Sessions in the current invention can occur or be perpetuated by default such that every time a sender responds to a previous multimedia message she is continuing a session. Otherwise, sessions can occur by participants chosing them based on topic, time, participant or any other criterion.

The session-based storage system includes at least one session between the sender and the recipient and stores at least one multimedia message in each session. Each session of the session-based storage system further stores multimedia messages received in response to a previous multimedia message present in the session.

### BRIEF DESCRIPTION OF DRAWINGS

In the drawings, the same or similar reference numbers identify similar elements or acts.

Figure 1 is an exemplary overview of the present invention;

Figure 2 is another exemplary overview of the present invention;

Figure 3 illustrates a block diagram of a session-based multimedia messaging system in accordance with an embodiment of the present invention;

Figure 4 is an exemplary implementation of a session-based storage system;

Figure 5 shows a flowchart of the process involved in forwarding a multimedia message in accordance with an embodiment of the invention;

Figure 6 shows an exemplary implementation of the process steps involved in transmission of a multimedia message between a sender and a recipient using the invention;

Figure 7 shows another exemplary implementation of the process steps involved in the transmission of a multimedia message between a sender and a recipient using the present invention;

Figure 8 is an exemplary flowchart relating to multimedia messaging services being extended to fixed-line and VoIP network recipients;

Figure 9 illustrates a flowchart relating to storage of a multimedia message received from an unknown caller in accordance with an embodiment of the present invention;

Figure 10 illustrates broadcasting of the multimedia messages in accordance with an embodiment of the present invention;

Figure 11 illustrates broadcasting of the multimedia messages in accordance with another embodiment of the present invention;

Figure 12 illustrates a block diagram of a user interface for sending multimedia messages between a sender and a recipient in accordance with an embodiment of the present invention; and

Figures 13A to 13H are exemplary illustrations of the user interface.

### DETAILED DESCRIPTION OF THE INVENTION

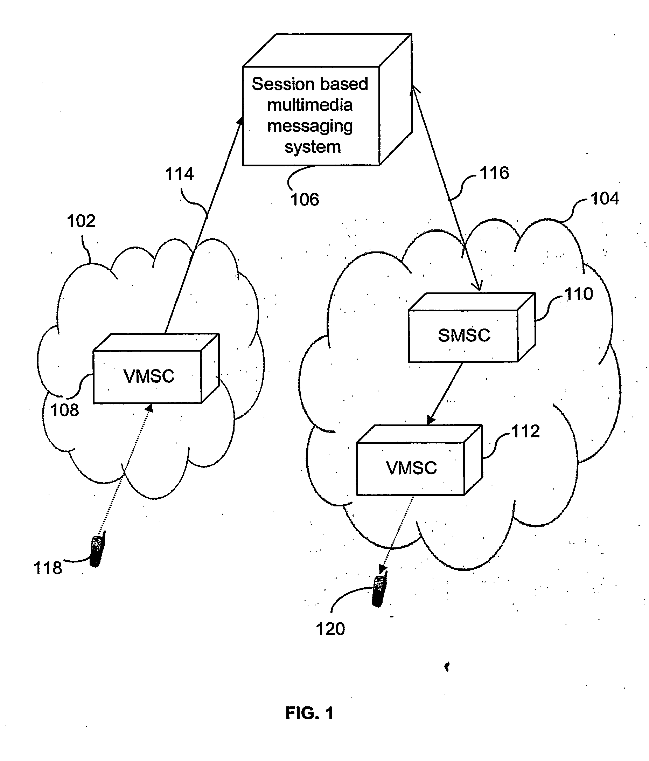

Figure 1 is an exemplary overview of the present invention. The overview illustrates a sender end 102 and a recipient end 104 coupled to a session-based multimedia messaging system 106. Sender end 102 comprises a VMSC 108 which communicates with session-based multimedia messaging system 106 via a link 114. Recipient end 104 comprises a SMSC 110 communicating with session-based multimedia messaging system 106 via a link 116. Further, SMSC 110 communicates with a VMSC 112. In various embodiments, link 114 may be a dedicated voice trunk, a normal voice trunk, or IP-based. In various embodiments, link 116 may be an SS7 interface or an IP protocol (for example, SMPP, UCP etc.) based. In various embodiments, SMSC 110 may be an external SMSC or a built-in SMSC or a dedicated SMSC.

When a sender 118 wishes to send a multimedia message to a recipient 120, he dials a number and indicates that a multimedia message, as opposed to an ordinary phone call or text message is to be initiated, (for example, by prepending a prefix before entering the recipient's phone number "*<recipient number>") . The multimedia message may be a voice SMS message or a video SMS message. The call may be routed via a circuit-switched network or a packet-based (for example, IP) network. VMSC 108 receives the call and is configured to route the prefixed call to session-based multimedia messaging system 106 via link 114.

Throughout this specification, a dialed prefix such as "*" or "#" is taught as a way of distinguishing the initiation of a multimedia message session from an ordinary voice call, text session or other communication. The specification will similarly, for simplicity's sake, refer to such a prefix as an indication or tag for other distinguishing treatment for a multimedia message or multimedia message request or initiation under the present invention. To be sure, any user or machine-actionable indication can be used while still embodying the present invention, in order to similarly indicate or distinguish a request to initiate or handle a multimedia message as distinct from any other sort of communications transaction. For example and without limiting the breadth of the present invention, other embodiments might use any of the following indicia in place of a dialed prefix such:
- A client application on the sending device or handset in which a user selects from a browsable menu of choices to identify the type of communications transaction she desires to initiate
- A voice response, or dialed-number response, or other recognition means invoked on the network side that would provide an opportunity to identify the desired message type after the phone number or recipient identification is entered, but before the call or transaction is connected for example during call setup
- Special physical keys on the handset or client device
- Special client devices that only are capable of sending multimedia messages, and not capable of making phone calls or other types of communications
- Distinct set of recipient id's such as buddy names or actual names, to be entered rather than phone numbers, when initiating a multimedia message
- selecting from a menu of potential recipients who are "online" or otherwise available to receive multimedia messages, that list possibly be published or updated in real-time at the network.

Session-based multimedia messaging system 106 receives a send-request associated with the call. When a connection is established between sender 118 and session-based multimedia messaging system 106, sender 118 leaves a multimedia message for recipient 120 and hangs up the call. Alternately, if the call duration has exhausted, session-based multimedia messaging system 106 ends the call. In an embodiment, in case of a voice SMS message, the connection between VMSC 108 and session-based multimedia messaging system 106 may be a circuited ISUP/ISDN/R2MF connection. In another embodiment, in case of a video SMS message, the connection between VMSC 108 and session-based multimedia messaging system 106 is a circuited ISUP/ISDN connection with UDI 64 kbps and BS30 for the call set up.

Session-based multimedia messaging system 106 stores the multimedia message in either an existing session or a new session of a session-based storage system based upon the identification of the session in the send-request. Session-based multimedia messaging system 106 sends an SMS alert to SMSC 110 of recipient end 104 corresponding to the multimedia message via link 116. SMSC 110 communicates with VMSC 112 which transmits the SMS alert to recipient 120. In an embodiment, the SMS alert is constructed with the prefixed sender number (e.g. "**<sender number>"), rather than just the sender's number as the sending party, in order to trigger the phone book entry in the recipient's handset. The message content of the SMS alert indicates whether the multimedia message is a voice SMS message or a video SMS message. Further, the SMS alert may indicate the call back number, for example, "**<sender number>" to retrieve the message or the call back number, for example, "<sender number>" to call back the sender. When going through SMPP, the protocol ID (GSM 340 or SMPP ref) of the SMS alert allows one touch return call on the sender's number.

In an embodiment, sender 118 and recipient 120 are subscribers of a common operator. In another embodiment, sender 118 and recipient 120 are subscribers of different operators. In the latter embodiment, session-based multimedia messaging system 106 may be deployed at sender's end 102 or by a third party. Further, the deployment of session-based multimedia messaging system 106 may be operator-specific or country-specific.

It may be noted that the overview describes using a single recipient. But the multimedia message may be transmitted to a plurality of recipients simultaneously. Figure 1 illustrates a non-limiting example of communication between each recipient and the sender.

A session under the present invention normally is a collection or history of one or more message notifications that start with an original message, and then is configured to include responses back and forth between sender and recipient. In that way, a session is like an e-mail thread as is known in the art of internet email, or a message-thread as is known in the art of internet newsgroups. In a preferred embodiment, indicating session at a sending device like the handset permits senders and recipients to select the correct multimedia messaging "conversation" or "thread" to respond to or participate in. Any sender can initiate a new session either by initiating a sua sponte multimedia message, rather than replying to a previously received one, or otherwise by indicating the start of a new "conversation" or session of sent and replied multimedia sessions. Sessions in the current invention can occur or be perpetuated by default such that every time a sender responds to a previous multimedia message she is continuing a session. Otherwise, sessions can occur by participants chosing them based on topic, time, participant or any other criterion.

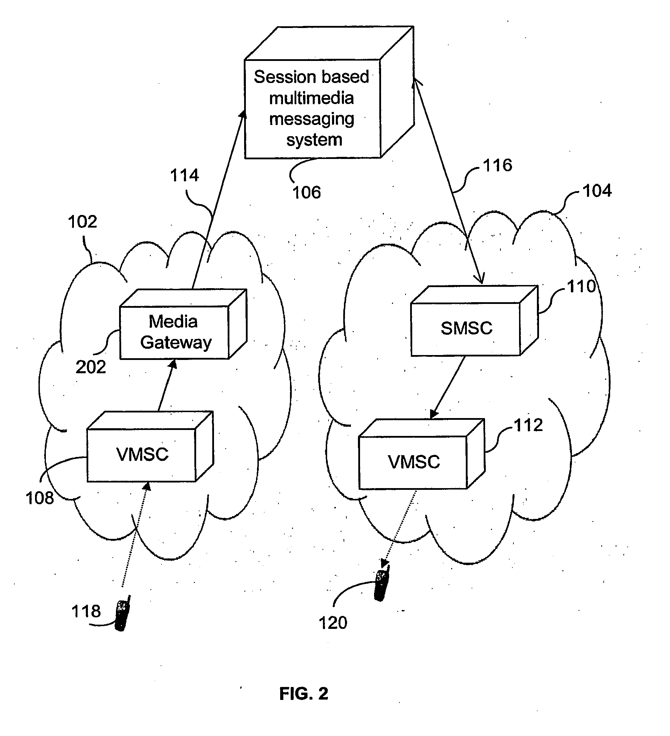

Figure 2 illustrates another exemplary overview of the present invention. In addition to the components disclosed in Figure 1, sender end 102 comprises a media gateway 202 coupled between VMSC 108 and session-based multimedia messaging system 106. In this embodiment, VMSC 102 is configured to route the call to media gateway 202 which in turn routes the call to session-based multimedia messaging system 106 via link 114. Link 114 may be a circuit-switched connection or a packet-based (for example, IP) link.

In an embodiment of the present invention, if a voice SMS message is to be sent, media gateway 202 is coupled to VMSC 108 via a circuited ISUP connection and session-based multimedia messaging system 106 via a SIP-based protocol, to route the call. In another embodiment of the present invention, if a video SMS message is to be sent, media gateway 106 is connected to VMSC 108 via a circuited ISUP connection having UDI 64 kbps and BS30 for call set up and session-based multimedia messaging system 106 via a SIP-based protocol, to route the call. The remaining components work as described in Figure 1.

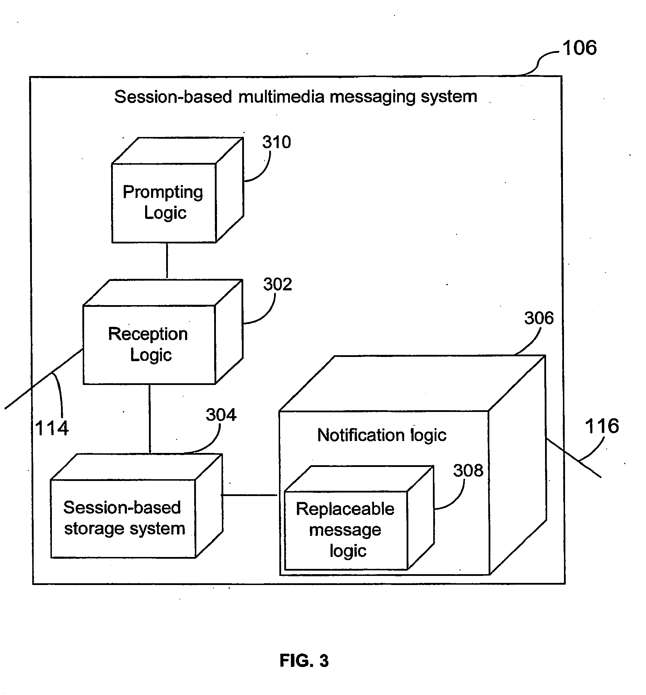

Figure 3 illustrates a block diagram of session-based multimedia messaging system 106 in accordance with an embodiment of the present invention. Session-based multimedia messaging system 106 comprises a reception logic 302, a session-based storage system 304 and a notification logic 306. Reception logic 302 receives a call either from VMSC 108 or media gateway 202 via link 114 when sender 118 wishes to send a multimedia message to at least one recipient. The call contains a send-request that includes an identification of a session in which the multimedia message is to be stored. The send-request, for example, includes without limitation, a first predefined code and a second predefined code. That first predefined code is any user or machine actionable indication (such as a prefix like "*") calling the function of multimedia message for the recipient at a session-based multimedia message system under the present invention. That second predefined code is any user or machine actionable indication (such as a different prefix like "**") calling the function of retrieving messages from a session-based multimedia message system under the present invention.

For each recipient, session-based storage system 304 stores the multimedia message in a session identified in the send-request. Session-based storage system 304 comprises of a plurality of sessions wherein each session contains at least one multimedia message. The sessions between a sender and a recipient are stored in an index structure in session-based storage system 304 where the index includes identification details, for example, phone numbers of sender 118 and recipient 120.

As described more fully above, and embellished throughout this specification, a session is a set of related multimedia message exchanges between a sender and a recipient. Each time the sender dials a first predefined code, for example, "*<recipient-phone number>", a new session is initiated in session-based storage system 304 between the sender and the recipient. To be sure, a multimedia message system, or multimedia message-initiating client application under the present invention can also break off or initiate new sessions without user interaction based on any number of criteria such as: (i) authenticated user or unauthenticated user; (ii) expiration of time since last message to that recipient; (iii) entry of a new topic or other criteria. Furthermore, sessions need not be limited to messages sent or received from the same devices, but rather can be based on identification or authentication of common users between messages sent. For example, a session can commence with a mobile phone user sending a multimedia message, but when the message is replied-to, that user may be receiving the reply message at her land line or on her computer. Sessions under the present invention can be, but need not be, limited to messages sent and received at consistent sending and receiving devices.

Thereafter, a multimedia message left by the sender is stored in the new session between the sender and the recipient. When the recipient dials a second predefined code, for example, "**<sender-phone number>", the recipient may retrieve the latest multimedia message (if any) sent by the sender in the latest active session between the sender and the recipient. The latest active session between a sender and a recipient is the session where the latest multimedia message by a sender to the recipient is deposited. The last session is the latest new session between a sender and a recipient. However, the latest active session might not be the last session initiated between a sender and a recipient. This is because a recipient may navigate a sender's multimedia message stored in a previous session and reply to that multimedia message in which case the previous session becomes the latest active session (although it is not last session) between the sender and the recipient. Further, if the recipient navigates another multimedia message stored in another session and replies to the multimedia message, then the another session becomes the latest active session. All the sessions containing new or unheard messages are treated as active sessions.

When a recipient responds to a multimedia message from a sender, the response is stored in the latest active session of session-based storage system 304 between the recipient and the sender. Further, every new session between a sender and a recipient may be marked by a time stamp. Session-based storage system 304 stores voice SMS messages in voice sessions while video SMS messages in video sessions.

Notification logic 306 sends a notification alert, for example, an SMS alert containing identification details of the stored multimedia message through SMSC 110 via link 116 (for example, SMPP protocol or SS7) to at least one recipient. Other notification alerts comprises, without limitation, a phone call, an instant message, a WAP push, and an email message. The identification details in a SMS alert include prefixed sender number (for example, "**<sender number>") rather than only the sender's number in order to trigger the phone book entry in the recipient's handset. The phone book entry of the handset may be triggered by the postfix digits of a caller ID or a SMS sender ID. The identification details also indicate a media type of the multimedia message, for example, voice, video or text. The protocol ID (GSM 340 or SMPP ref) of the SMS alert allows one touch return call on the sender's number. For example, in SMPP, the media type may be "Voice SMS" and the call back number may be "**<sender number>". The call back number in the SMS alert may be "**<sender number>" instead of "<sender party>" to allow the possibility of a one-touch call back on the SMS alert for the recipient to retrieve the multimedia message. Otherwise, the call is routed to the sender. In an embodiment, to allow the recipient to call the sender directly, the message content of the SMS alert may also contain the number of the sender.

The present invention contains various innovative means to improve an existing user "phone book" stored at the sending or receiving device to include actionable indicia that the user can select in order to initiate multimedia messages or multimedia message sessions. For example, client-based or network-based software can copy each phone number labeled as a mobile phone number in a user's phone book and add an "other" phone number that includes the prefix or other indication necessary to invoke a multimedia message as opposed to an ordinary phone call when the user, application, or system selects that entry as a desired recipient of a multimedia message.

Notification logic 306 comprises a replaceable message logic 308 that provides for a replaceable message type in a SMS protocol ID. When a message type is replaceable, a new SMS alert of the message type overwrites a previous SMS alert of the same message type and the same sender if a previous SMS alert is already present in a recipient's handset. This results in a single SMS alert being present in the handset of the recipient corresponding to a plurality of multimedia messages being sent by the sender.

Further, in an embodiment, session-based multimedia messaging system 106 comprises a prompting logic 310 that prompts the sender to include its phone number in the multimedia message, if reception logic 302 does not receive the phone number of the sender. If the sender does not input its phone number, session-based storage system 304 stores the multimedia message in a randomly named session (for example, "ABC"). However, on receipt of the details of the sender (for example, phone number), session-based storage system 304 stores the multimedia message in the required session.

In an embodiment, to prevent someone from entering a fake number, the reception logic may apply an authentication function to send an SMS alert containing a numeric pin. The numeric pin is entered by the sender to verify that the number he has entered is his own.

It will be apparent to a person skilled in the art that various components or logic disclosed in conjunction with the disclosed embodiments of the present invention are logically unique entities. One or more of these blocks may be implemented on a single network node without deviating from the spirit and scope of the present invention. Further, the functions performed by two or more of these components/logic may be merged into a single program code for implementation on a network node. Also, the functions performed by one component or logic can be distributed into two or more program codes for implementation at different network nodes. Various implementations imbibing the teachings of the present invention will be apparent to one skilled in the art. All these implementations are deemed to lie within the spirit and scope of the present invention.

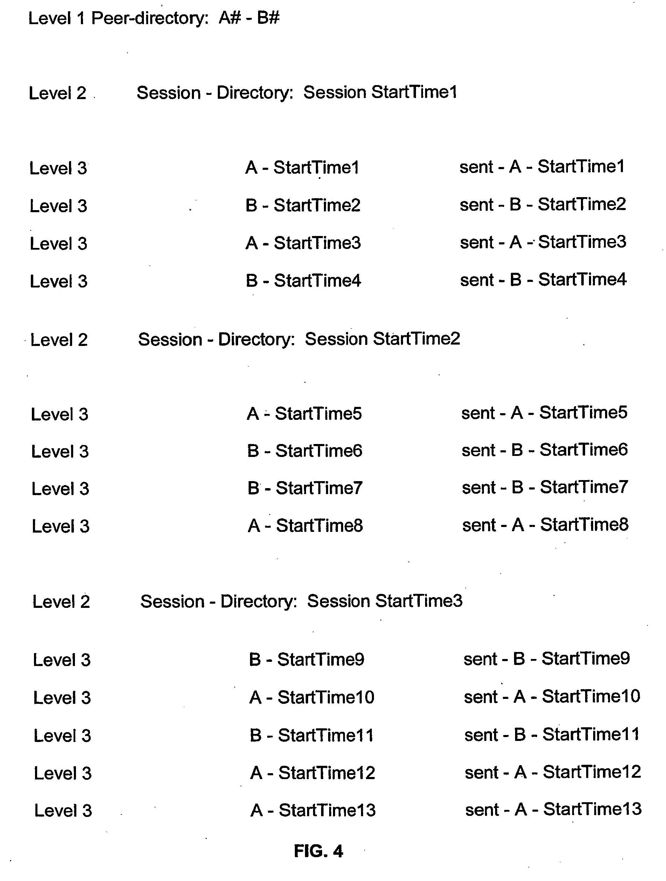

Figure 4 is an exemplary implementation of session-based storage system 304. Session-based storage system 304 follows a hierarchical structure including index (Level 1), sessions (Level 2) and multimedia messages (Level 3). When multimedia messages are exchanged between an A-party and a B-party, a directory is created to store the multimedia messages in a session-based structure. The directory comprises an index (Level 1) containing the A-party number concatenated with the B-party number by an operator (eg. "-"). In an embodiment, the smaller number amongst the A-party number and the B-party number may be listed first in the index. The index (Level 1) contains at least one session (Level 2) for storing at least one multimedia message (Level 3) in each session (Level 2). Each session (Level 2) is created as a new directory which may be named by the starting-time of the session. Each session directory contains a plurality of multimedia messages (Level 3) wherein each multimedia message may be named by the sender (A-party or B-party) of the multimedia message and the starting-time of the multimedia message. For each multimedia message, there may be an additional copy of a multimedia message denoting sent multimedia message for the sender for book-keeping purpose. This multimedia message may be named, for example, as "sent-<SenderID-start-time-of-the-message>".

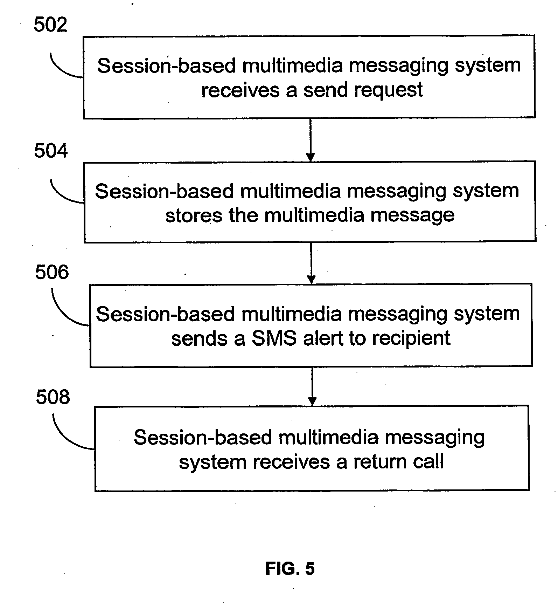

Figure 5 shows a flowchart for sending a multimedia message in accordance with an embodiment of the present invention. At step 502, the session-based multimedia messaging system receives a send-request corresponding to a multimedia message from a sender. The send-request includes an identification of a session in which the multimedia message is to be stored. Once the call is established, the sender leaves the multimedia message. The session-based storage system of the session-based multimedia messaging system stores the multimedia message in the session of a session-based storage system identified in the send-request at step 504. If the send-request contains a first predefined code, the multimedia message is stored in a new session of the session-based storage system. However, if the send-request contains a second predefined code, the multimedia message i.e. a response to a previous message from a sender in a session, is stored in the session of the session-based storage system between the sender and the recipient. Further, video SMS messages are stored separately from voice SMS messages in the session-based storage system. The maximum duration of the multimedia message can be configured by an operator. For example, the maximum duration of a video SMS message may be 1 minute, while the maximum duration of each voice SMS message may be 30 seconds.

At step 506, the notification logic in the session-based multimedia messaging system sends an SMS alert of the multimedia message to a recipient. The SMS alert comprises identification details of the stored multimedia message and is overwrittable in nature. A previous SMS alert is overwritten by the new SMS alert of the same message type of the SMS alert and of the same sender, if a previous SMS alert corresponding to the same sender is present in a handset of the recipient. The sender's identification details include for example, a media type of the multimedia message, a number of the sender, or any combination thereof.

In an embodiment, the difference in the SMS alert relating to a voice SMS message and a video SMS message may be:
1. The identification details of the SMS alert is "Video SMS" rather than "Voice SMS".
2. The protocol identifier or message type for overwrittable video SMS alert is different from overwrittable voice SMS alert so that the two SMS alerts don't overwrite each other.
3. The return call key for video message service is a video call key rather than the normal send/call key.

However, the video SMS message may require that both sender and recipient handsets and networks have higher bandwidth digital transmission capability such as so called "3G" "WCDMA" "3GSM" "WiFi" or "WiMax" capability. At step 508, the session-based multimedia messaging system receives a return call from the recipient to retrieve the multimedia message. The session-based storage system allows the recipient to access the multimedia message.

In an embodiment, the charging of the multimedia message may be event-based irrespective of the duration of the multimedia message. The multimedia message can be retrieved for free for a configurable number of times. However, if the multimedia messages are retrieved again, they may be charged per event although the rate for retrieving the voice SMS message or video SMS message may be different from sending or replying the multimedia message. The billing system may filter out the CDRs of the sender or the recipient where calls are prefixed with "*" and use the CDR generated from the session-based multimedia messaging system for billing.

Billing for use of multimedia messaging under the present invention can be based on any of the criteria recorded in the system, including without limitation: (i) per message; (ii) per month; (iii) per session; (iv) by membership in "buddy" groups or clubs; (v) by second, minute or other time increment; (vi) by message received; (vii) by message sent; (viii) by message received; (ix) by message ignored. Forwarding, broadcasting, or deleting messages, or other behaviors that the operator or system considers desirous can be rewarded with credit towards the bill, or with points in multimedia messaging-based games.

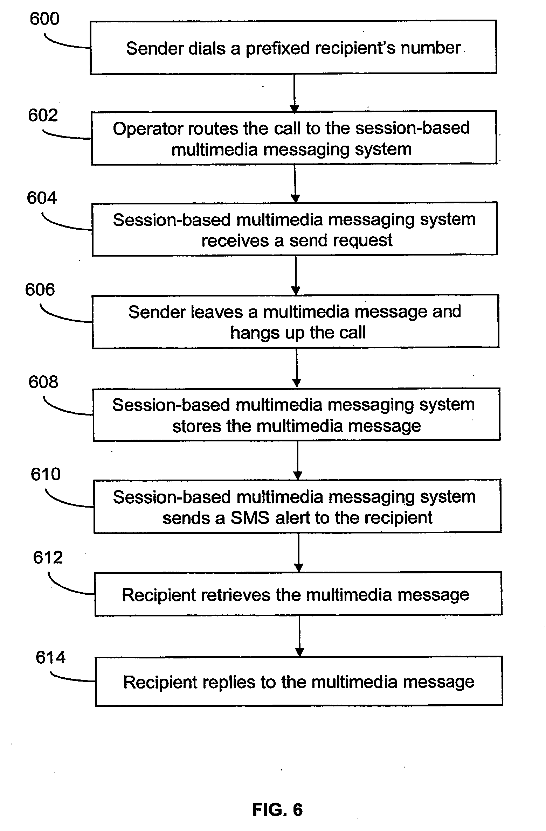

Figure 6 shows an exemplary implementation of the process steps involved in the transmission of a multimedia message between a sender and a recipient using the present invention. At step 600, the sender dials the recipient number with a prefix, for example the * sign, as defined by the operator. The sender may dial via either a video call key for a video SMS message or a normal send or call key for voice SMS message to forward a send-request corresponding to the multimedia message to a session-based multimedia messaging system. The operator routes the call to the session-based multimedia messaging system to enable the sender to leave a multimedia message in a session of the session-based storage system identified in the send-request at step 602.

At step 604, the session-based multimedia messaging system receives the send-request from the sender. The send-request includes an identification of the session in which the multimedia message is to be stored and a recipient's number with a special prefix for example, "*", which may be defined and configured by an operator.

The sender leaves the multimedia message at the session-based multimedia messaging system and hangs up the call (or otherwise stops recording the message) at step 606. The session-based multimedia messaging system stores the multimedia message in the identified session of a session-based storage system at step 608. At step 610, the session-based multimedia messaging system sends an overwrittable SMS alert to the recipient indicating the sender's name. The SMS alert may include the sender's identification details for example, phone number, in the format of "**<sender number>" and a media type of the multimedia message. The recipient returns a call on the multimedia message to directly retrieve the sender's multimedia SMS message at step 612. If the recipient wishes to reply to the multimedia message, he may press a designated key (for example, 1) (other than the "#" key, the "*" key and the "0" key) and leave a multimedia message for the sender at step 614. Alternatively, the recipient may reply to the multimedia message by dialing "**<sender number>". The recipient then hangs up the call. The VMSC routes the call of the multimedia message for * destination numbers to the session-based multimedia messaging system.

Note that in a preferred embodiment, the multimedia messaging system will provide for default keys by which users can invoke common functions such as distinguishing a dialed number or communications transaction for multimedia message rather than phone call, replying to a message or retrieving a message (elsewhere referred to as potential uses of a "first predefined code" or a "second predefined code." For example, the "8" key can be used to denote "Voice" or "Video". The "7" key could be used for "Reply." The "5" key could be used because it is conveniently located in the middle of the handset. The "2" or "3" keys might be preferred because they are at the top of the keypad and less likely to be miskeyed.

The sender receives an SMS alert to which the sender can return a call to retrieve the multimedia message and so on. The multimedia messages in reply to the previous multimedia message (for example, voice SMS message or video SMS message) are stored in the same session of the session-based storage system between the sender and the recipient. However, if the sender or the recipient desires to store the multimedia message in a new session, the sender or the recipient can dial the other party's number prefixed with a first predefined code, for example, "*".

Further, the recipient may respond to the multimedia message as a text message or a call. The recipient can select the sender number embedded in the SMS alert to call or send a text message after viewing the SMS alert. Alternatively, if the recipient receives a text message which is a response to the recipient's original multimedia message to the sender, he can reply to the text message as a voice SMS message or a video SMS message or a text message. Unlike normal peer to peer SMS, the text replies are routed through the session-based multimedia messaging system. However, non-voice initiated normal peer-to-peer SMS cannot generate a multimedia message as a response unless the destination number is prefixed by a first predefined code, for example, "*".

Also, the session-based multimedia messaging system may facilitate value addition to a multimedia message. The value addition may be, without limitation, addition of advertisements to the multimedia message.

For both the first and second predefined codes, the VMSC routes the voice call to the session-based multimedia messaging system and the SMSC routes the multimedia message to the session-based multimedia message system.

The recipient may dial "*<forward-to-number>" to forward a multimedia message to a third party. In accordance with an embodiment of the present invention, each forwarded multimedia message may be twice the limit of an individual multimedia message. When the multimedia message is forwarded to the third party, it will be stored in a new session of the session-based storage system with a new index, indicating the recipient and the third party. In an embodiment relating to forwarding of the multimedia messages, each time a multimedia message is forwarded from the recipient to a third party, the sender receives the credit. Subsequently, each time the multimedia message is forwarded, either the original sender or each sender (who has forwarded the multimedia message) or both receive the credit for example (i) on their phone bill; (ii) for free multimedia messages in the future; (iii) as points in a communications or community-based game.

The multimedia message will be stored for a configurable number of days. A separate software program can periodically clean up (for example, delete or copy to back up) the overdue multimedia message.

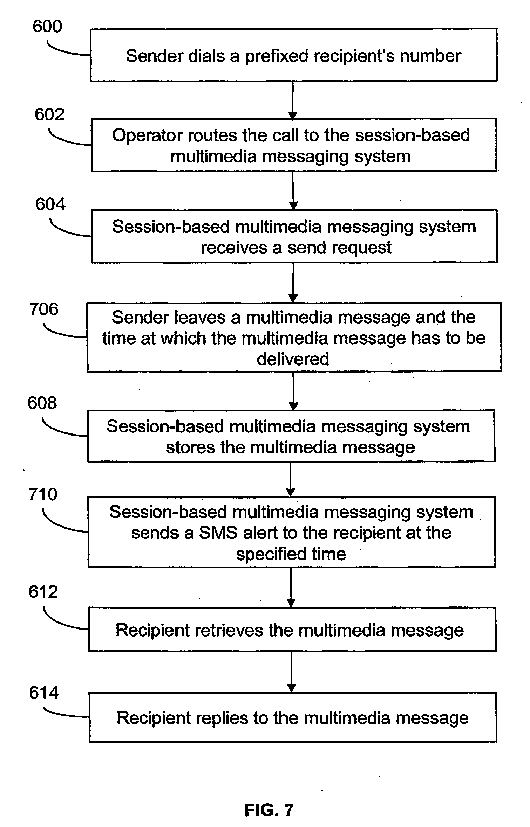

Figure 7 shows another exemplary implementation of the process steps involved in the transmission of a multimedia message between a sender and a recipient using the present invention. In this implementation, after step 604, the sender leaves a multimedia message and inputs a time at which the multimedia message has to be delivered to the recipient at the session-based multimedia messaging system at step 706. This enables the sender to schedule delivery of the multimedia message at a specified time to the recipient.

The session-based multimedia messaging system stores the multimedia message in the identified session of a session-based storage system at step 608. At step 710, the session-based multimedia messaging system sends an overwrittable SMS alert to the recipient indicating the sender's name at the specified time.

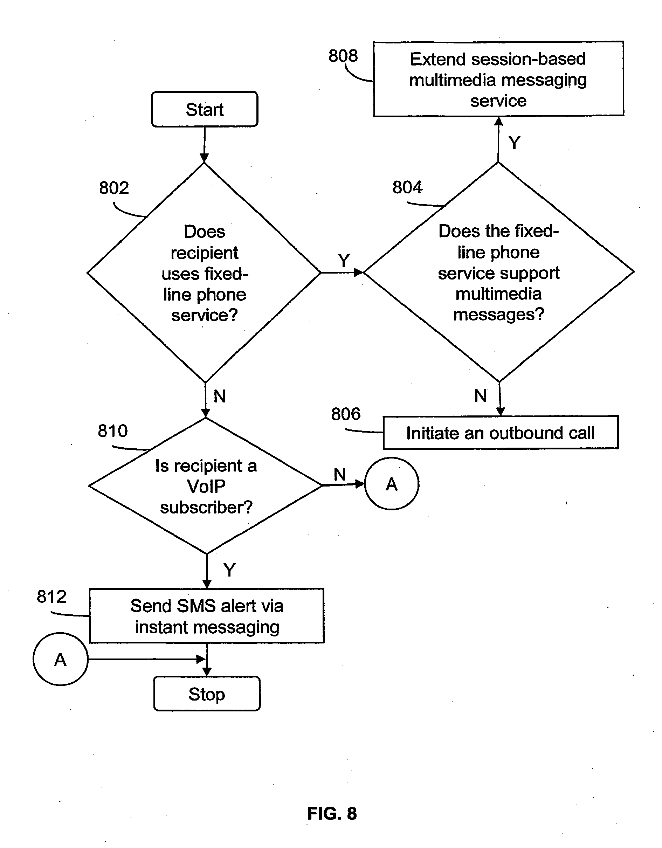

The present invention can be extended to VoIP networks and subscribers of fixed-line phone services in some countries, or VoIP services that support SMS-like service (example instant messaging etc.). Figure 8 is an exemplary flowchart relating to multimedia messaging services being extended to fixed-line and VoIP network recipients. The session-based multimedia messaging system checks whether the recipient uses a fixed-line phone service at step 802. In an embodiment, this check is performed based on the phone number of the recipient. In many countries, fixed-line numbers are separate from mobile numbers. Thus, it would be easy for the session-based multimedia messaging system to distinguish between the two numbers and decide the right alert mechanism to use. In case the same numbering plan is used, the session-based multimedia messaging system can either use a SS7 network to issue a MAP SRI-SM query over a SCCP UDT transport with "return on error" set to see if an unknown subscriber, or a non-routable number is returned or query an external DB to determine it. Further, a video SMS message can be extended to fixed line video devices in a similar manner.

If the recipient uses a fixed-line phone service, the session-based multimedia messaging system checks whether the service supports multimedia messaging at step 804. If the fixed-line phone service does not support the multimedia messaging, the present invention initiates an outbound call to play the multimedia message to the recipient device together with instructions on how to reply at step 806. In an embodiment, to help the fixed-line recipient distinguish the incoming multimedia call from ordinary calls, the session-based multimedia messaging system prefixes the sender's number with, for example, "**". The recipient can use a fixed line phone to reply. The outbound call can also prompt the recipient to enter a pin or a key before playing the multimedia message. The outbound call can also be made at separate intervals for a configurable number of times. However, if the fixed-line phone service supports the multimedia messaging, the session-based multimedia messaging service is extended to the recipient at step 808.

At step 810, the session-based multimedia messaging system checks whether the recipient is a VoIP subscriber. The session-based multimedia messaging system send an SMS alert to the recipient via instant messaging that contains an URL to retrieve the multimedia message at step 812. When the VoIP subscriber replies to the multimedia message, the sender receives the multimedia message left by the recipient.

The present invention can be extended to email services. The recipient can configure an option to receive the SMS alert (and the multimedia message or the URL of the multimedia message) via an email address. The recipient can also reply to the multimedia message via a PC. The recipient can also return a text reply (or the sender can send a message in a text format), which the session-based multimedia messaging system can convert (Text-To-Speech) to voice SMS message for the sender.

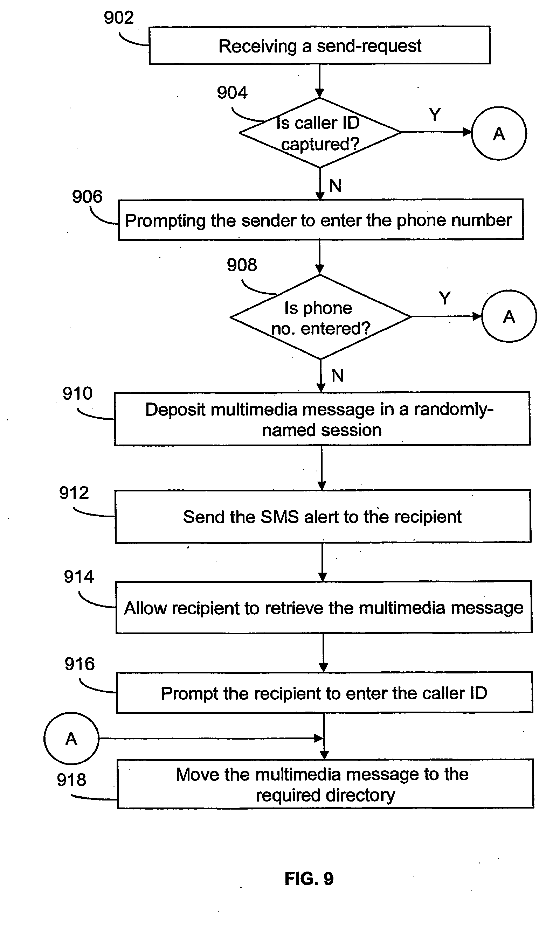

Figure 9 illustrates a flowchart relating to the storage of a multimedia message received from an unknown caller in accordance with an embodiment of the present invention. Various embodiments, in which the caller ID of a caller may not be received from an unknown caller, include, but are not limited to, events when the caller restricts its caller ID or when the caller ID is not delivered (for example, international case). At step 902, the session-based multimedia messaging system receives a send-request from a sender. At step 904, the session-based multimedia messaging system conducts a check to determine whether the send-request includes the caller ID. If the caller ID is present, the multimedia message is stored in the session identified in the send-request. However, if the caller ID is absent, the session-based multimedia messaging system can prompt the sender to enter his/her mobile number prior to or after the leaving the multimedia message in the session-based multimedia messaging system at step 906. At step 908, a check is performed to determine whether the session-based multimedia messaging system obtained the caller ID. In case the caller ID is already captured but restricted, the session-based multimedia messaging system can request permission for the captured caller ID. Alternatively, the sender can send the multimedia message using someone else's phone. In this scenario, the sender may be presented with an option from the session-based multimedia messaging system to enter an alternative sender number. An authentication function might be applied to verify the sender's number.

If the caller ID is not obtained, the session-based multimedia messaging system stores the multimedia message in the session-based storage system in a randomly named session, for example, "unknown-recipient" at step 910. The notification logic sends the SMS alert to the recipient without containing the sender address, for example "**" or "**123" where 123 is an operator configured short-code for unknown sender at step 912. On receiving a call from the recipient in response to the SMS alert, the session-based multimedia messaging system allows the recipient to retrieve the multimedia message sent by the unknown caller at step 914.

When the recipient attempts to reply to the multimedia message, the session-based multimedia messaging system prompts the recipient to enter the caller ID of the sender at step 916. At this point, verification may not be required since the recipient can attribute any number to be the sender of the multimedia message. Once the caller ID of the sender is received from the recipient, the multimedia message is moved under a directory in the session-based multimedia messaging system named by the two parties at step 918.

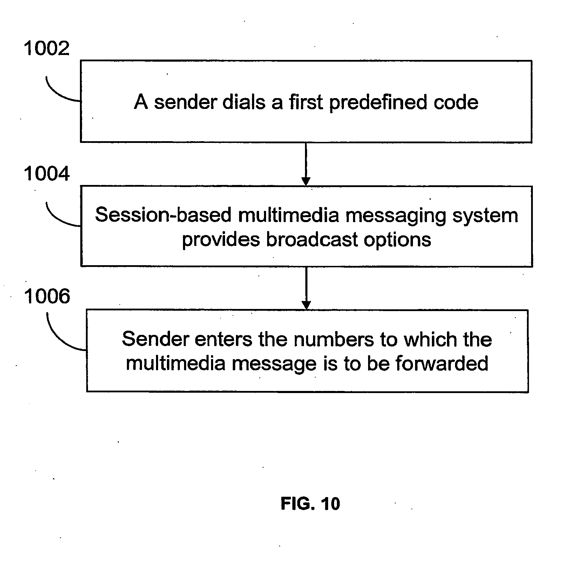

Figure 10 illustrates broadcasting of the multimedia messages in accordance with an embodiment of the present invention. At step 1002, a sender dials the first predefined code to enter the session-based multimedia messaging system. The session-based multimedia messaging system provides a number of broadcast options to the sender at step 1004. After selecting the broadcast options, the sender can enter the numbers where he wishes to forward the multimedia message at step 1006. In an embodiment, the multimedia message is forwarded via DTMF. Further, the session-based multimedia messaging system can prompt the sender to enter a plurality of recipient numbers. Alternatively, the sender may define the plurality of recipient numbers at the session-based multimedia messaging system while subscribing for this service. As an example, each set may include the plurality of numbers separated by "*", or any other machine or user entered indication.

Once the sender enters all the numbers to which the multimedia message has to be broadcasted, he may include a symbol, for example, "#", to mark that all the broadcast numbers are entered. An example illustrating a plurality of numbers entered for broadcasting is "2224343*3434343*333333#". Alternatively, if the number sequence is not ended with the symbol, a prompt, for example, "please separate the numbers by *, and, if all the numbers are entered, end with #" is played.

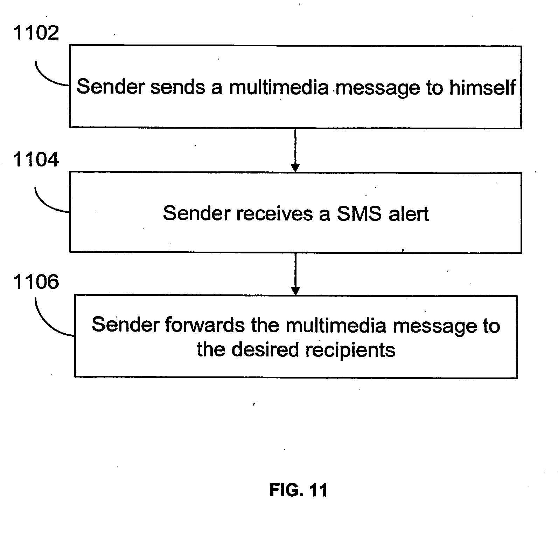

Figure 11 illustrates broadcasting of the multimedia messages in accordance with another embodiment of the present invention. Here, the present invention also includes a convenient way for a sender to add multiple recipients to a multimedia message by using his handset's phonebook using the "Add Recipient" function of most SMS clients. In this way, Add Recipient can be used for adding multiple addressees to a multimedia message under the present invention even in instances when the multimedia messaging system is only deployed at the network, with no modifications to the client. In the absence of such a technique, as described elsewhere in this specification, the sender would have to key enter the multiple recipients' phone numbers from memory without being able to interact with the phone book. Normally, an SMSC will only store an SMS message in manner accessible to the originally addressed recipient. So for this technique to operate smoothly for forwarding a multimedia message, the SMSC needs to be monitored, or messages addressed automatically in such a way for these types of forwarded or broadcast multimedia messages to be retrievable by the forwarded recipients and not just the originally intended ones.

At step 1102, the sender sends a multimedia message to himself, for example, <A> dials "*<A>". The session-based multimedia messaging system sends an SMS alert to the sender at step 1104. The content of the SMS alert indicates a message broadcast reference of the copy of the multimedia message that the sender has left for himself. The content may also indicate that the recipient should dial "**<A>" to retrieve the broadcast message.

At step 1106, the sender enters the numbers of the plurality of recipients either directly or by using his phone address book to the party he wishes to forward the received multimedia message. The forwarding is captured by a SMSC message monitor. The SMSC message monitor monitors all the multimedia messages sent by the SMSC. It can be used by a group of SMSCs with each member SMSC making a copy of every multimedia message to the SMSC message monitor.

The SMSC message monitor sends each forwarding message to the session-based multimedia messaging system. The session-based multimedia messaging system may create a copy of the multimedia message identified by a message broadcast reference for each forward-to party. It can also note down the message broadcast reference from the CDR for billing purposes. In various embodiments, the operator can additionally charge the sender for each forward-to party (perhaps at a lower price than a normal multimedia deposit) or make it free, since the forwarded multimedia message is charged to the sender for each forward-to party.

The recipients can retrieve the multimedia message by dialing the second predefined code (e.g. "**") either from the SMS alert content (which should contain "**<sender-number>") or directly (e.g. "*0*) from the handset. Since the sender of the forward message to each forward-to party is the sender number rather than "**<sender-number>", the recipient cannot call back on the forward message directly.

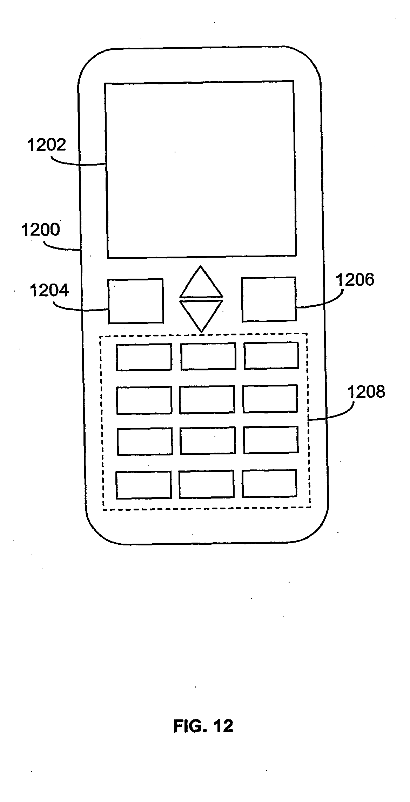

Figure 12 illustrates a block diagram of a user interface 1200 involved in accordance with an embodiment of the present invention for sending Multimedia messages between a sender and a recipient. User interface 1200 comprises a display 1202, a normal dial 1204, a video dial 1206, and at least one user interface element 1208. User interface element 1208 includes, without limitation, a keypad, a joystick, a touch screen or a trackball. User interface element 1208 provides a session-based access of at least one multimedia message to a recipient. The session-based access may be based upon at least one criterion. The criterion includes without limitation, selection of a session, position of a multimedia message, or the time at which a multimedia message is sent.

User interface 1200 facilitates various operations including, but not limited to, sending a multimedia message, retrieving a multimedia message, replying to a multimedia message, or forwarding a multimedia message. User interface 1200 further facilitates navigation of the multimedia messages to a sender within a session, or between sessions with a recipient, or between sessions across all recipients. Similarly, user interface 1200 facilitates navigation of the multimedia messages to a recipient within a session, or between sessions with a sender, or between sessions across all senders. The recipient of a voice SMS may view an SMS alert that displays a notification of at least one multimedia message received from a sender using display 1202. The SMS alert may comprise identification details of the stored multimedia message, for example, sender ID in the format "**<sender's phone number>".

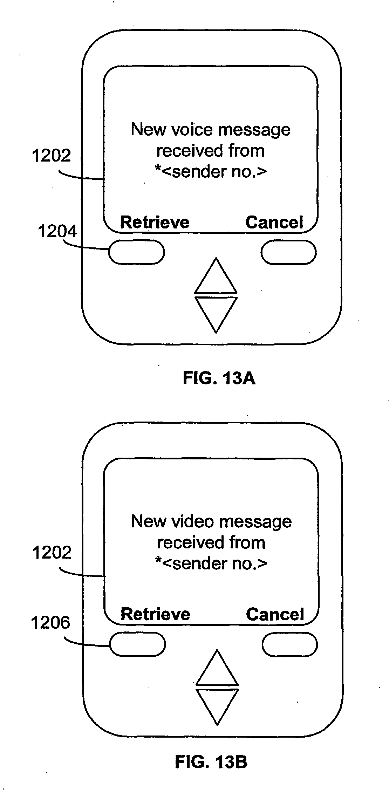

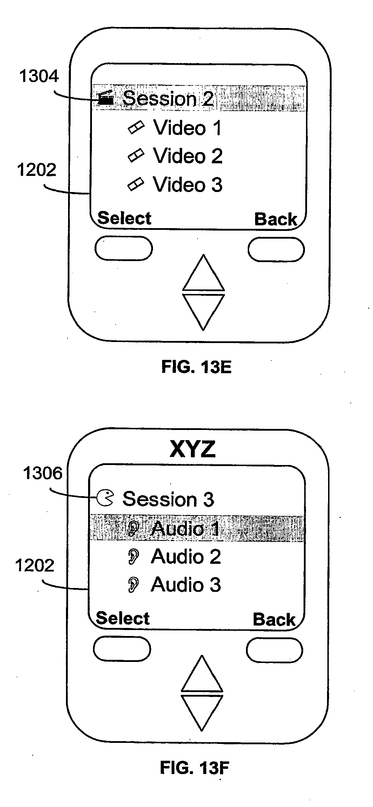

The sender dials a prefixed recipient number to send the multimedia message to the recipient. In case of a voice SMS message, the sender dials the prefixed recipient number via normal dial 1204. In case of a video SMS message, sender dials the prefixed recipient number via video dial 1206. Once the call is set, the sender hears a prompt file (for example, a long tone, or "you have up to 30 seconds to leave a message") instructing him to record the multimedia message. The sender leaves the multimedia message. The sender may hear another prompt file warning him of the remaining time to record the multimedia message (for example, "5 seconds left"). The multimedia message may be recorded in a new or an existing session based on the session identified in the send-request of the sender. Figures 13A through 13H illustrate user interfaces based on visual user-interactive indicia rather than audible indicia, but either are well-suited for user interaction with the multimedia messaging system of the present invention.

In one embodiment of the present invention, the sender may not be provided with a replay and re-record option. In accordance with an alternate embodiment, first time users may be prompted with a menu that includes the re-recording option for a configurable period of time. By using a user interface element, for example, the "0" key, the sender may view menu choices explicitly.

The recipient can retrieve the multimedia message after receiving the SMS alert by using normal dial 1204, video dial 1206 or by dialing the second predefined code using the user interface. At least one user interface input, for example, "**<phone number>" key sequence, retrieves a latest multimedia message from a latest active session between the sender and the recipient. The recipient can also retrieve at least one of his own sent multimedia messages by using at least one user interface input 1208, for example, "*" key, within an existing session. Each press of "*" key will point to the previous sent multimedia message within the same session. When the end of the session is reached, the "*" key will point to the top of the sent multimedia message.

At least one user interface element 1208, for example, "*+*" or "*0*" key sequence, enables the recipient to retrieve all new multimedia messages left by a plurality of senders in a chronological order. In this case, to avoid confusion, a menu may be played after each multimedia message. Also, during a voice or a video call, whether it is to send, retrieve or reply to a multimedia message, the recipient can use a user interface input, for example "11", to retrieve any new multimedia messages that have not been retrieved. The recipient can retrieve the multimedia messages for a configurable number of times (for example, twice) before an option prompt file, which details other available options, may be played.

In an embodiment, when a sender initiates a call to leave a new multimedia message for a recipient in a new session when there is a new message from the recipient waiting, then, if the waiting multimedia message is within a configurable interval (i.e. 5 minutes), an operator/subscriber may play the waiting multimedia message first. The sender may interrupt this multimedia message anytime by using at least one user interface element 1208. Thereafter, the session-based multimedia messaging system may prompt the sender to either leave a multimedia message in a new session or reply to the multimedia message just heard.

The recipient can browse through the multimedia messages after receiving the SMS alert. To browse the multimedia messages, the recipient enters the session-based multimedia messaging system by triggering a call back to the SMS alert or by calling "**<sender-number>". Thereafter, the recipient can use at least one user interface element 1208, for example, "#" key, to browse through the multimedia messages sent by the sender stored in a session. Each "#" key press allows the recipient to rotate through the multimedia messages sent to him and stored in the active session. Alternatively, the recipient can use at least one user interface element 1208, for example, "*" key, to browse through the multimedia messages sent by himself stored in the active session. Alternatively, at least one user interface element 1208, for example "##" key sequence, enables the recipient to browse through the sessions between the sender and the recipient. At least one user interface element 1208, for example, "*0*", enables the recipient to browse through the new messages in all the active sessions between the recipient and a plurality of senders.

Further, once the sender leaves a multimedia message in the session-based multimedia messaging system, the sender can browse through the multimedia messages stored in the one or more sessions. The user interface element to browse through the multimedia messages for the sender may be similar to the user interface element used by the recipient to browse through the multimedia messages. Alternatively, the operator may define different user interface element(s).

At least one user interface element 1208 (other than "*", "0", "#" key), enables the recipient to reply to the retrieved multimedia message. A warning may be given to the recipient when the time is about to exhaust (for example, "5 seconds left"). There may not be a replay and re-recording choice although it may be available to a premium or an inexperienced user. Further, a recipient may initiate a new session in response to a multimedia message by using user interface element 1208, for example an escape key. Alternatively, the sender/ recipient listening to a multimedia message can press an escape key, for example, "99", to bring a menu option in which he can have a choice to send a new multimedia message to any number to start a new session.

Further, the recipient can reply to the latest multimedia message in the latest active sessions or he can navigate through the sessions to select a session to listen to the multimedia messages in that session and reply to the latest message in that session. The selected session will be the latest active session for the recipient.

The recipient or the sender may delete the messages for him or from him. However, they cannot delete the multimedia message stored in session-based storage system for other subscribers or from other subscribers. The recipient or the sender may use at least one user interface element 1208, for example, "00" key sequence, to delete a multimedia message which is either a sent multimedia message or a received multimedia message.

The recipient can forward a multimedia message to a third party by using at least one user interface element 1208, for example, "*<forward-to-number>#" key sequence. Alternatively, the user may use a user interface element, for example, "0" to bring up the menu choice. The recipient may be prompted with a prelude (for example, "Please add what you want to say to the forwarded message"), once the third party is located. The resultant forward action constitutes a new session between the recipient and the third party in the session-based storage system. The messages are properly recorded between the recipient and the third party for subsequent interactions. In an embodiment, the total duration of the forwarded multimedia message does not exceed twice (for example, 2*30 seconds) of the allowed limit of an individual multimedia message duration (for example, 30 seconds).

The sender may schedule delivery of a multimedia message. This allows the sender to send a multimedia message (including broadcast ones) at a scheduled time. The user interface to enter a time via a phone can be in military time format (for example, 1530 for 330pm), or generic to include time, day, month and year (for example, 153012082006 for 330pm 12^{th} Aug 2006). The scheduled delivery can act as a reminder or wake up call to the sender himself or to recipients.

Further, the sender may request an acknowledgement of the delivery of the multimedia message to the recipient using at least one user interface element 1208, for example, by selecting a choice from the option menu brought out from the "0" key. An option choice can also allow the sender/ recipient to preset some options so that they do not have to set the same every time they wish to send/ receive the multimedia message.

The configuration of the maximum duration of a multimedia message may be a system wide property. Different categories of subscribers may be defined so that each category (for example, premium users) can have different maximum durations (for example, 60 seconds instead of 30 seconds). The multimedia message can be a voice SMS message or a video SMS message. In an embodiment of the present invention, the maximum duration for a voice SMS message is 30 seconds and for the video SMS message is 1 minute. Similarly, various prompt files mentioned may be system wide. Different categories of subscribers may have different prompt files. Further, the sender or the recipient can create separate phone book entries with a prefixed number in the handset. Also, the key sequences involved for different operations can be configured by the session-based multimedia messaging system.

Further, at any time, a prompt (or a menu choice) may be presented to a caller. The prompt can have different versions played based on caller experience and caller settings. For example, a beginner of a multimedia message can have an elaborated prompt each time a prompt is made while an experienced caller can hear a beep.

Figures 13A to 13H are exemplary illustrations of the user interface, in accordance with various embodiments of the present invention.

Figures 13A and 13B illustrate exemplary SMS alerts for voice SMS message and video SMS message respectively displayed on display 1202 of the recipient handset, in accordance with one embodiment of the present invention. To retrieve the voice SMS message or the video SMS message, the recipient may use normal dial 1204, or video dial 1206. Alternatively, the recipient dials the second predefined code using the user interface.

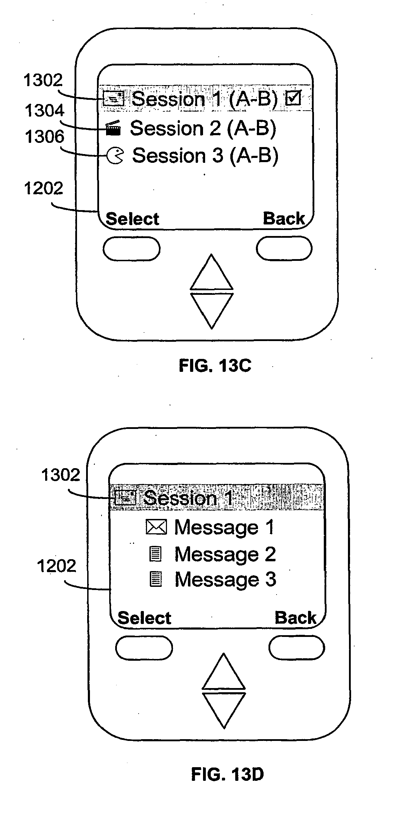

Figure 13C illustrates an exemplary user interface for browsing multimedia messages. Display 1202, displays the sessions (for example, session 1, session 2, and session 3) between the sender (A) and the recipient (B). Further, different icons may be used for the sessions to allow the user to differentiate between text, video and voice SMS messages. For example, in the figure, icon 1302 denotes a text session, icon 1304 denotes a video session, and icon 1306 enables a voice session.

Figures 13D to 13F illustrate exemplary user interface for browsing multimedia messages in a text, video and voice session respectively, in accordance with one embodiment of the present invention. The multimedia messages (text, voice or video) are listed under a session and may be accompanied by an icon differentiating read / retrieved multimedia messages and unread / un-retrieved multimedia messages. For example, in Figure 13D, the icon for 'Message 1' denotes an unread message, while the icon for 'Message 2' and 'Message 3' denotes a read multimedia message.

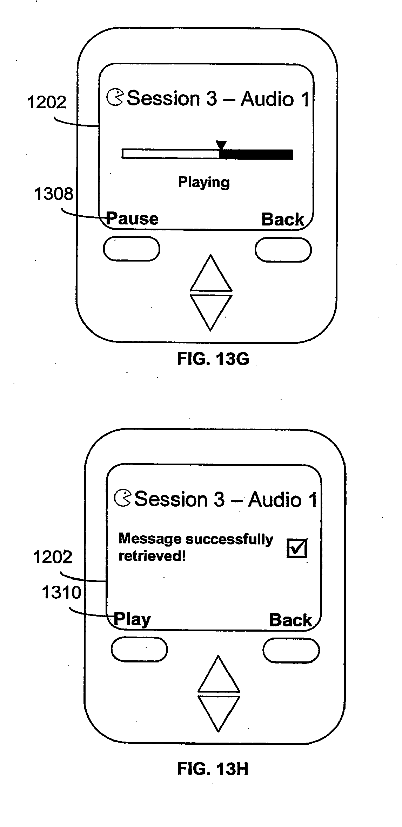

Figure 13G illustrates an exemplary user interface showing the progress of playback of a voice SMS message, in accordance with one embodiment of the present invention. The user may be provided an option "pause" 1308 to pause the playback of the multimedia message. In an embodiment, the multimedia message may still continue to download while the playback is paused, and be stored for later playback.

Figure 13H illustrates a user interface displaying that a voice SMS message has been retrieved successfully, in accordance with one embodiment of the present invention. Display 1202 in the figure shows a multimedia message indicating the completion of the download of the voice message 'Session 3 - Audio 1'. The user is presented with an option to playback the voice SMS message using Play option 1310.

A variety of user interfaces may be employed in conjunction with embodiments of the present invention. Further, the VVSS may provide a number of different user interfaces that a user can choose from, depending on their device capability. In one embodiment of the present invention, the user may browse through and retrieve voice and video SMS messages through an interactive voice response (IVR) interface of the session-based multimedia messaging system. In another embodiment, the session-based multimedia messaging system may provide a Java-based interface for J2ME enabled devices.

In the foregoing description, specific embodiments of the present invention have been described by way of examples with reference to the accompanying figures and drawings. One of ordinary skill in the art will appreciate that various modifications and changes can be made to the embodiments without departing from the scope of the present invention as set forth in the claims below. Accordingly, the specification and figures are to be regarded in an illustrative rather than a restrictive sense, and all such modifications are intended to be included within the scope of the present invention.

The present invention can take the form of an entirely hardware embodiment, an entirely software embodiment or an embodiment containing both hardware and software elements. In accordance with an embodiment of the present invention, the invention is implemented in software, which includes but is not limited to firmware, resident software, microcode, etc.

Furthermore, the invention can take the form of a computer program product accessible from a computer-usable or computer-readable medium providing program code for use by or in connection with a computer or any instruction execution system. For the purposes of this description, a computer-usable or computer readable medium can be any apparatus that can contain, store, communicate, propagate, or transport the program for use by or in connection with the instruction execution system, apparatus, or device.

The medium can be an electronic, magnetic, optical, electromagnetic, infrared, or semiconductor system (or apparatus or device) or a propagation medium. Examples of a computer-readable medium include a semiconductor or solid state memory, magnetic tape, a removable computer diskette, a random access memory (RAM), a read-only memory (ROM), a rigid magnetic disk and an optical disk. Current examples of optical disks include compact disk - read only memory (CDROM), compact disk - read/write (CD-R/W) and DVD.

### Other Variations

Provided above for the edification of those of ordinary skill in the art, and not as a limitation on the scope of the present invention are detailed illustrations of a scheme for forwarding at least one multimedia message between a sender and a recipient via a session-based multimedia messaging system. Numerous variations and modifications within the spirit of the present invention will of course occur to those of ordinary skill in the art in view of the embodiments that have now been disclosed. For example, while in the described embodiments, the present invention is implemented primarily from the point of view of common-carrier networks of voice telecommunications by mobile means, the present invention may also be effectively implemented on a handset of a fixed line phone (including VoIP, PC desktop client etc).

The session-based multimedia messaging service is radio technology independent and works with 2G (GSM or CDMA or PDC or other) or 3G (3GPP, 3GPP2, IMS etc) technology. Further, it is completely handset independent from a sender's (including reply) perspective since it only requires a phone call to a backend IVR system. The handset can therefore be a fixed line phone (including VoIP, PC desktop client etc) or mobile phone (including all IP, SIP, IMS etc). However, the SMS alert mechanism described above requires the recipient device of the multimedia message to support multimedia message which is a basic functionality of mobile phones.

The examples under the present invention detailed in the illustrative examples contained herein are described using terms and constructs drawn largely from GSM mobile telephony infrastructure. But use of these examples should not be interpreted to limiting the present invention to those media. The present invention can be of use and provided through any type of telecommunications medium, including without limitation: (i) any mobile telephony network including without limitation GSM, 3GSM, 3G, PCS, TDMA, CDMA or CDMA 2000, satellite phones or other mobile telephone networks or systems; (ii) any so-called WiFi apparatus normally used in a home or subscribed network, but also configured for use on a visited or non-home or non-accustomed network, including apparatus not dedicated to telecommunications such as personal computers, Palm-type or Windows Mobile devices,; (iii) an entertainment console platform such as Sony Playstation, PSP or other apparati that are capable of sending and receiving telecommunications over home or non-home networks, or even (iv) fixed-line devices made for receiving communications, but capable of deployment in numerous locations while preserving a persistent subscriber id such as the eye2eye devices from Dlink; or telecommunications equipment meant for voice over IP communications such as those provided by Vonage or Packet8.

### Abbreviations

3G: 3rd Generation
3GPP: 3rd Generation Partnership Project
3GPP2: 3rd Generation Partnership Project 2
BS: Base Station
CAMEL: Customized Applications for Mobile network Enhanced Logic
CDMA: Code Division Multiple Access
CDR: Call Detail Record
DB: Data Bases
DTMF: Dual Tone, Multi-Frequency
GPRS: General Packet Radio Service
GSM: Global System for Mobile communication
HPMN: Home Public Mobile Network
IMS: IP Multimedia Subsystem
IP: Internet Protocol
ISDN: Integrated Services Digital Network
ISUP: ISDN User Part
IVR: Interactive Voice Response
MMS: Multimedia Message Service
PCS: Personal Communications Services
PDC: Personal Digital Communications
PSP: Protocols for Specific Purposes
R2MF:
SCCP: Signal Connection Control part
SIP: Session Initiation Protocol
SMPP: Short Message Peer to Peer Protocol
SMS: Short Message Service
SMSC: Short Message Service Center
SRI-SM: Send Routing Information for Short Message
SS7: Signaling System 7
TCP/IP: Traffic Control Protocol/ Internet Protocol
TDMA: Time Division Multiple Access
UCP: Universal Computer Protocol
UDI: Unrestricted Digital Information
UDT: Unit DaTa
URL: Uniform Resource Locator
VMSC: Visited Mobile Switch Center
VoIP: Voice on Internet Protocol
WiFi: Wireless fidelity

### Technical references

GSM 378 on CAMEL

Digital cellular telecommunications system (Phase 2+);

Customised Applications for Mobile network Enhanced Logic (CAMEL) Phase 2; Stage 2

(GSM 03.78 version 6.7.0 Release 1997)

GSM 978 on CAMEL Application protocol
Digital cellular telecommunications system (Phase 2+);
Customised Applications for Mobile network Enhanced Logic (CAMEL);
CAMEL Application Part (CAP) specification
(GSM 09.78 version 7.1.0 Release 1998)

Q761-Q730 on ISUP Signaling, Function and Procedure

Q.761 (Functional description of the ISDN User Part of CCITT Signaling System No. 7)

Q.762 (General functions of CCITT Signaling System No. 7 ISDN User Part Messages and parameters)

Q.763 (Formats and codes of CCITT Signaling System No. 7 ISDN User Part Messages and parameters)

Q.764 (1999), Signaling System No. 7 - ISDN User Part signaling procedures '

Q.763 (1999), Signaling System No. 7 - ISDN User Part formats and codes

Q.730 (1999), ISDN User Part supplementary services

Q.711 (1996), Functional description of signaling connection control part

Q.712 (1996), Definition and function of signaling connection control part messages

Q.713 (1996), Signaling connection control part formats and codes

Q.714 (1996), Signaling connection control part procedures

Q.716 (1993), Signaling Connection Control Part (SCCP) performance

GSM 340 on SMS
Digital cellular telecommunications system (Phase 2+);
Technical realization of the Short Message Service (SMS);
(GSM 03.40 version 7.4.0 Release 1998)

SMPP Forum: SMPP Protocol Document Version:- 12-Oct-1999 Issue 1.2

Universal Mobile Telecommunications System (UMTS);
Multimedia Messaging Service (MMS), Functional description;
Stage 2
(3GPP TS 23.140 version 4.2.0 Release 4)

GSM 902 on MAP specification
Digital cellular telecommunications system (Phase 2+);
Mobile Application Part (MAP) Specification
(3GPP TS 09.02 version 7.9.0 Release 1998)

GSM 340 on SMS
Digital cellular telecommunications system (Phase 2+);
Technical realization of the Short Message Service (SMS);
(GSM 03.40 version 7.4.0 Release 1998)

GSM 378 on CAMEL
Digital cellular telecommunications system (Phase 2+);
Customised Applications for Mobile network Enhanced Logic (CAMEL) Phase 2;
Stage 2
(GSM 03.78 version 6.7.0 Release 1997)

GSM 978 on CAMEL Application protocol
Digital cellular telecommunications system (Phase 2+);
Customised Applications for Mobile network Enhanced Logic (CAMEL); CAMEL Application Part (CAP) specification
(GSM 09.78 version 7.1.0 Release 1998)

### Technical Specification

3rd Generation Partnership Project;
Technical Specification Group Services and System Aspects;
Service accessibility
(Release 1999)

Signalling procedures and the Mobile Application Part (MAP)
(Release 1999)

Q1214-Q1218 on Intelligent Networks
IMS architectures, 3GPP, and 3GPP2

## Claims

1. A session-based multimedia messaging system (106) for sending an alert of a multimedia message from a sender to at least one recipient, the session-based multimedia messaging system comprising:
• a reception logic (302) adapted for receiving a send-request corresponding to a multimedia message from the sender, wherein the send-request includes an identification of a session in which the multimedia message is to be stored;
• a session-based storage system (304) adapted for storing the multimedia message in the session indicated by the send-request; and
• a notification logic (306) adapted for sending an alert of the multimedia message to at least one recipient, the alert comprising identification details of the stored multimedia message,
and wherein the alert comprises a replaceable message logic (308) for overwriting the message type of a previous alert with the message type of the alert corresponding to the same sender, thereby resulting in a single alert being present in the handset of a recipient corresponding to a plurality of multimedia messages being sent by the sender.

2. The system of claim 1, wherein the alert is an SMS alert.

3. The system of claim 1, wherein the alert is an MMS alert.

4. The system of claim 1, wherein the alert is audible.

5. The system of claim 1, wherein the session-based storage system comprises a new session for storing a multimedia message received with the send-request containing a first predefined code.

6. The system of claim 1, wherein the session-based storage system comprises an active session for storing a response to a multimedia message received with the send-request containing a second predefined code.

7. The system of claim 1, wherein the session-based storage system comprises at least one voice session for storing voice SMS messages.

8. The system of claim 1, wherein the session-based storage system comprises at least one video session for storing video SMS messages.

9. The system of claim 1, wherein the multimedia message comprises one of a voice SMS message.

10. The system of claim 1, wherein the multimedia message comprises one of a video SMS message.

11. The system of claim 1, wherein the identification details in the alert comprises at least one of a media type of the multimedia message, and a number of the sender.

12. The system of claim 11, wherein the media type is selected from a group consisting of voice, text and video.

13. The system of claim 1, further comprising a prompting logic (310) requesting the sender to include its phone number in the multimedia message, if the send-request does not contain the phone number of the sender.

14. The system of claim 1, wherein the session-based storage system stores the multimedia message in a randomly named session, if the phone number of the sender is not received.

15. The system of claim 14, wherein the session-based storage system stores the multimedia message in the required session after receiving the forwarding details of the sender from a recipient.

16. A method for sending an alert of a multimedia message from a sender to at least one recipient via a session-based multimedia messaging system, the method comprising:
• receiving a send-request corresponding to the multimedia message from the sender (502), wherein the send-request includes an identification of a session in which the multimedia message is to be stored;
• storing the multimedia message in the session of a session-based storage system indicated by the send-request (504); and
• sending an alert of the multimedia message to at least one recipient (506), the alert comprising identification details of the stored multimedia message,
and wherein the alert comprises a replaceable message logic (308) for overwriting the message type of a previous alert with the message type of the alert corresponding to the same sender, thereby resulting in a single alert being present in the handset of a recipient corresponding to a plurality of multimedia messages being sent by the sender.

17. The method of claim 16, wherein the alert is an SMS alert.

18. The method of claim 16, wherein the alert is an MMS alert.

19. The method of claim 16, wherein the alert is audible.

20. The method of claim 16, wherein the storing comprises storing the multimedia message in a new session of the session-based storage system, if the send-request contains a first predefined code.

21. The method of claim 16, wherein the storing comprises storing the multimedia message in an existing session of the session-based storage system, if the send-request contains a second predefined code.

22. The method of claim 16, wherein the storing comprises storing voice SMS messages in at least one voice session of the session-based storage system.

23. The method of claim 16, wherein the storing comprises storing video SMS messages in at least one video session of the session-based storage system.

24. The method of claim 17, wherein the single alert corresponds to a plurality of voice SMS messages being sent by the sender.

25. The method of claim 16, wherein the identification details in the alert comprises at least one of a media type of the multimedia message, and the sender's number.

26. The method of claim 25, wherein the media type is selected from a group consisting of voice, text and video.

27. The method of claim 16, further comprising requesting the sender to include its phone number in the multimedia message, if the send-request does not contain the phone number of the sender.

28. The method of claim 16, further comprising storing the multimedia message in a randomly named session of the session-based storage system, if the phone number of the sender is not received.

29. The method of claim 16, further comprising moving the multimedia message from the randomly named session to the required session after receiving the forwarding details of the sender from a recipient.

30. The method of claim 16, wherein the multimedia message comprises one of a video SMS message, and a voice SMS message.

31. The method of claim 16, further comprising converting the multimedia message into a text message.

32. The method of claim 16, further comprising providing value added services to the multimedia message.

33. The method of claim 16, further comprising sending the multimedia message to at least one recipient at a time specified by the sender.

34. The method of claim 16, further comprising providing credit to the sender when the recipient forwards the sender's multimedia message to a third party.

35. The method of claim 16, further comprising detecting the type of device used by the recipient.

36. The method of claim 35, wherein the type of device is selected from a group consisting of a fixed-line phone, a personal computer and a mobile phone.

37. The method of claim 35, further comprising selecting the type of notification alert depending on the type of device used by the recipient.

38. The method according to claim 37, wherein the type of the notification alert comprises one of an SMS alert, a phone call, an instant message a WAP push, and an email.

39. A computer program product code for forwarding a multimedia message from a sender to at least one recipient via a session-based multimedia messaging system, the computer program product comprising:
• computer program code for receiving a send-request corresponding to the multimedia message from the sender when said code is executed on a computer, wherein the send-request includes an identification of a session in which the multimedia message is to be stored;
• computer program code for storing the multimedia message in the session of a session-based storage system indicated by the send-request when said code is executed on a computer;
• computer program code for sending an SMS alert of the multimedia message to at least one recipient when said code is executed on a computer, the SMS alert comprising identification details of the stored multimedia message; and
• computer program code for a replaceable SMS alert that overwrites the message type of a previous SMS alert with the message type of the SMS alert when said code is executed on a computer, thereby resulting in a single SMS alert being present in the handset of a recipient corresponding to a plurality of voice SMS messages being sent by the sender.

40. The computer program product code of claim 39, further comprising computer program code for storing the multimedia message in a new session of the session-based storage system when said code is executed on a computer and if the send-request contains a first predefined code.

41. The computer program product code of claim 39, further comprising computer program code for storing the multimedia message in an existing session of the session-based storage system when said code is executed on a computer and if the send-request contains a second predefined code.

42. The computer program product code of claim 39, further comprising a computer program code for requesting the sender to include its phone number in the multimedia message when said code is executed on a computer and if the send-request does not contain the phone number of the sender.

43. The computer program product code of claim 39, further comprising computer program code for storing the multimedia message in a randomly named session of the session-based storage system when said code is executed on a computer and if the phone number of the sender is not received.

44. The computer program product code of claim 39, further comprising computer program code for moving the multimedia message from the randomly named session to the required session after receiving the forwarding details of the sender from a recipient when said code is executed on a computer.

45. The computer program product code of claim 39, further comprising computer program code for converting the multimedia message into a text message when said code is executed on a computer.

46. The computer program product code of claim 39, further comprising computer program code for providing value added services to the multimedia message when said code is executed on a computer.

47. The computer program product code of claim 39, further comprising computer program code for sending the multimedia message to at least one recipient at a time specified by the sender when said code is executed on a computer.

48. The computer program product code of claim 39, further comprising computer program code for providing credit to the sender when the recipient forwards the sender's multimedia message to a third party when said code is executed on a computer.

49. The computer program product code of claim 39, further comprising computer program code for detecting the type of device used by the recipient when said code is executed on a computer.

## Patentansprüche

1. Sitzungsbasiertes Multimedia-Nachrichtenübermittlungssystem (106) zum Senden eines Hinweises auf eine Multimedia-Nachricht von einem Absender an zumindest einen Empfänger, wobei das sitzungsbasierte Multimedia-Nachrichtenübermittlungssystem Folgendes umfasst:
• eine Empfangslogik (302), die zum Empfang einer Sende-Anforderung ausgebildet ist, die einer Multimedia-Nachricht von dem Absender entspricht, wobei die Sende-Anforderung eine Identifikation einer Sitzung einschließt, in der die Multimedia-Nachricht zu speichern ist;
• ein sitzungsbasiertes Speichersystem (304), das zum Speichern der Multimedia-Nachricht in der durch die Sende-Anforderung angezeigten Sitzung ausgebildet ist; und
• eine Benachrichtigungslogik (306), die zum Senden eines Hinweises über die Multimedia-Nachricht an den zumindest einen Empfänger ausgebildet ist, wobei der Hinweis Identifikations-Einzelheiten der gespeicherten Multimedia-Nachricht umfasst,
und wobei der Hinweis eine austauschbare Nachrichten-Logik (308) zum Überschreiben des Nachrichten-Typs eines vorhergehenden Hinweises mit dem Nachrichten-Typ des Hinweises umfasst, der dem gleichen Absender entspricht, was dazu führt, dass ein einziger Hinweis in dem Handapparat eines Empfängers vorhanden ist, der einer Mehrzahl von Multimedia-Nachrichten entspricht, die von dem Absender gesandt wurden.

2. System nach Anspruch 1, bei dem der Hinweis ein SMS-Hinweis ist.

3. System nach Anspruch 1, bei dem der Hinweis ein MMS-Hinweis ist.

4. System nach Anspruch 1, bei dem der Hinweis akustisch ist.

5. System nach Anspruch 1, bei dem das sitzungsbasierte Speichersystem eine neue Sitzung zum Speichern einer Multimedia-Nachricht umfasst, die mit der den ersten vordefinierten Code enthaltenden Sende-Anforderung empfangen wird.

6. System nach Anspruch 1, bei dem das sitzungsbasierte Speichersystem eine aktive Sitzung zum Speichern einer Antwort auf eine Multimedia-Nachricht umfasst, die mit der einen zweiten vordefinierten Code enthaltenden Sende-Anforderung empfangen wird.

7. System nach Anspruch 1, bei dem das sitzungsbasierte Speichersystem zumindest eine Sprach-Sitzung zum Speichern von Sprach-SMS-Nachrichten umfasst.

8. System nach Anspruch 1, bei dem das sitzungsbasierte Speichersystem zumindest eine Video-Sitzung zum Speichern von Video-SMS-Nachrichten umfasst.

9. System nach Anspruch 1, bei dem die Multimedia-Nachricht eine einer Sprach-SMS-Nachricht umfasst.

10. System nach Anspruch 1, bei dem die Multimedia-Nachricht eine von einer Video-SMS-Nachricht umfasst.

11. System nach Anspruch 1, bei dem die Identifikations-Einzelheiten in dem Hinweis zumindest eines von einem Medien-Typ der Multimedia-Nachricht und einer Nummer des Absenders umfasst.

12. System nach Anspruch 11, bei dem der Medien-Typ aus einer Gruppe ausgewählt ist, die aus Sprache, Text und Video besteht.

13. System nach Anspruch 1, das weiterhin eine Aufforderungslogik (310) umfasst, die den Sender auffordert, seine Telefonnummer in die Multimedia-Nachricht einzufügen, wenn die Sende-Anforderung nicht die Telefonnummer des Senders enthält.

14. System nach Anspruch 1, bei dem das sitzungsbasierte Speichersystem die Multimedia-Nachricht in einer zufällig benannten Sitzung speichert, wenn die Telefonnummer des Senders nicht empfangen wird.

15. System nach Anspruch 14, bei dem das sitzungsbasierte Speichersystem die Multimedia-Nachricht in der erforderlichen Sitzung nach dem Empfang der Weiterleitungs-Einzelheiten des Absenders durch einen Empfänger speichert.

16. Verfahren zum Senden eines Hinweises auf eine Multimedia-Nachricht von einem Absender an zumindest einen Empfänger über ein sitzungsbasiertes Multimedia-Nachrichtenübermittlungssystem, wobei das Verfahren Folgendes umfasst:
• Empfangen einer Sende-Anforderung, die der Multimedia-Nachricht entspricht, von dem Absender (502), wobei die Sende-Anforderung eine Identifikation einer Sitzung einschließt, in der die Multimedia-Nachricht zu speichern ist;
• Speichern der Multimedia-Nachricht in der Sitzung eines sitzungsbasierten Speichersystems, das durch die Sende-Anforderung (504) angezeigt ist; und
• Senden eines Hinweises auf die Multimedia-Nachricht an zumindest einen Empfänger (506), wobei der Hinweis Identifikations-Einzelheiten der gespeicherten Multimedia-Nachricht umfasst,
und wobei der Hinweis eine austauschbare Nachrichtenlogik (308) zum Überschreiben des Nachrichten-Typs eines vorhergehenden Hinweises mit dem Nachrichten-Typ des Hinweises umfasst, der dem gleichen Absender entspricht, was dazu führt, dass ein einziger Hinweis in dem Handapparat eines Empfängers entsprechend einer Mehrzahl von Multimedia-Nachrichten vorhanden ist, die von dem Absender gesandt wurden.

17. Verfahren nach Anspruch 16, bei dem der Hinweis ein SMS-Hinweis ist.

18. Verfahren nach Anspruch 16, bei dem der Hinweis ein MMS-Hinweis ist.

19. Verfahren nach Anspruch 16, bei dem der Hinweis akustisch ist.

20. Verfahren nach Anspruch 16, bei dem das Speichern das Speichern der Multimedia-Nachricht in einer neuen Sitzung des sitzungsbasierten Speichersystems umfasst, wenn die Sende-Anforderung einen ersten vordefinierten Code enthält.

21. Verfahren nach Anspruch 16, bei dem das Speichern das Speichern der Multimedia-Nachricht in einer vorhandenen Sitzung des sitzungsbasierten Speichersystems umfasst, wenn die Sende-Anforderung einen zweiten vordefinierten Code enthält.

22. Verfahren nach Anspruch 16, bei dem das Speichern das Speichern von Sprach-SMS-Nachrichten in zumindest einer Sprachsitzung des sprachbasierten Speichersystems umfasst.

23. Verfahren nach Anspruch 16, bei dem das Speichern das Speichern von Video-SMS-Nachrichten in zumindest einer Videositzung des sitzungsbasierten Speichersystems umfasst.

24. Verfahren nach Anspruch 17, bei dem der einzelne Hinweis einer Mehrzahl von Sprach-SMS-Nachrichten entspricht, die von dem Sender gesandt wurden.

25. Verfahren nach Anspruch 16, bei dem die Identifikations-Einzelheiten in dem Hinweis zumindest eines von einem Medien-Typ der Multimedia-Nachricht und der Nummer des Absenders umfasst.

26. Verfahren nach Anspruch 25, bei dem der Medien-Typ aus einer Gruppe ausgewählt ist, die aus Sprache, Text und Video besteht.

27. Verfahren nach Anspruch 16, das weiterhin eine Aufforderung an den Absender umfasst, seine Telefonnummer in die Multimedia-Nachricht einzufügen, wenn die Sende-Anforderung die Telefonnummer des Absenders nicht enthält.

28. Verfahren nach Anspruch 16, das weiterhin das Speichern der Multimedia-Nachricht in einer zufällig benannten Sitzung des sitzungsbasierten Speichersystems umfasst, wenn die Telefonnummer des Absenders nicht empfangen wird.

29. Verfahren nach Anspruch 16, das weiterhin das Bewegen der Multimedia-Nachricht von der zufällig benannten Sitzung zu der erforderlichen Sitzung nach dem Empfang der Weiterleitungs-Einzelheiten des Absenders durch einen Empfänger umfasst.

30. Verfahren nach Anspruch 16, bei dem die Multimedia-Nachricht eine von einer Video-SMS-Nachricht und einer Sprach-SMS-Nachricht umfasst.

31. Verfahren nach Anspruch 16, das weiterhin die Umwandlung der Multimedia-Nachricht in eine Text-Nachricht umfasst.

32. Verfahren nach Anspruch 16, das weiterhin die Bereitstellung von Mehrwert-Diensten zu der Multimedia-Nachricht umfasst.

33. Verfahren nach Anspruch 16, das weiterhin das Senden der Multimedia-Nachricht an zumindest einem Empfänger zu einer durch den Absender bestimmten Zeit umfasst.

34. Verfahren nach Anspruch 16, das weiterhin die Bereitstellung einer Gutschrift an den Absender umfasst, wenn der Empfänger die Multimedia-Nachricht des Absenders an einen dritten Teilnehmer weiterleitet.

35. Verfahren nach Anspruch 16, das weiterhin die Feststellung des Typs des von dem Empfänger verwendeten Gerätes umfasst.

36. Verfahren nach Anspruch 35, bei dem der Typ des Gerätes aus einer Gruppe ausgewählt ist, die aus einem Festnetztelefon, einem persönlichen Computer und einem Mobiltelefon besteht.

37. Verfahren nach Anspruch 35, das weiterhin die Auswahl des Typs des Benachrichtigungs-Hinweises in Abhängigkeit von der Art des von dem Empfänger verwendeten Gerätes umfasst.

38. Verfahren nach Anspruch 37, bei dem der Typ des Benachrichtigungs-Hinweises eines von einem SMS-Hinweis, einem Telefonanruf, einer Sofortmitteilung, einer WAP-Schiebe-Mitteilung und einer E-Mail umfasst.

39. Computerprogrammprodukt-Code zum Weiterleiten einer Multimedia-Nachricht von einem Absender an zumindest einen Empfänger über ein sitzungsbasiertes Multimedia-Nachrichtenübermittlungssystem, wobei das Computerprogrammprodukt Folgendes umfasst:
• Computerprogrammcode zum Empfang einer der Multimedia-Nachricht entsprechenden Sende-Anforderung von dem Sender, wenn der Code auf einen Computer ausgeführt wird, wobei die Sende-Anforderung eine Identifikation einer Sitzung einschließt, in der die Multimedia-Nachricht zu speichern ist;
• Computerprogrammcode zum Speichern der Multimedia-Nachricht in der Sitzung eines sitzungsbasierten Speichersystems, die durch die Sende-Anforderung angezeigt ist, wenn der Code auf einem Computer ausgeführt wird;
• Computerprogrammcode zum Senden eines SMS-Hinweises der Multimedia-Nachricht an zumindest einen Empfänger, wenn der Code auf einem Computer ausgeführt wird, wobei der SMS-Hinweis Identifikations-Einzelheiten der gespeicherten Multimedia-Nachricht umfasst; und
• Computerprogramm-Code für einen auswechselbaren SMS-Hinweis, der den Nachrichten-Typ eines vorhergehenden SMS-Hinweises mit dem Nachrichten-Typ des SMS-Hinweises überschreibt, wenn der Code auf einem Computer ausgeführt wird, was dazu führt, dass ein einzelner SMS-Hinweis in dem Handapparat eines Empfängers vorhanden ist, der einer Mehrzahl von Sprach-SMS-Nachrichten entspricht, die von dem Absender gesandt wurden.

40. Computerprogrammprodukt-Code nach Anspruch 39, der weiterhin Computerprogramm-Code zum Speichern der Multimedia-Nachricht in einer neuen Sitzung des sitzungsbasierten Speichersystems umfasst, wenn der Code auf einem Computer ausgeführt wird und wenn die Sende-Anforderung einen ersten vordefinierten Code enthält.

41. Computerprogrammprodukt-Code nach Anspruch 39, der weiterhin Computerprogramm-Code zum Speichern der Multimedia-Nachricht in einer vorhandenen Sitzung des sitzungsbasierten Speichersystems umfasst, wenn der Code auf einem Computer ausgeführt wird und wenn die Sende-Anforderung einen zweiten vordefinierten Code enthält.

42. Computerprogrammprodukt-Code nach Anspruch 39, der weiterhin einen Computerprogramm-Code zum Auffordern des Absenders zum Einfügen seiner Telefonnummer in die Multimedia-Nachricht umfasst, wenn der Code auf einem Computer ausgeführt wird und wenn die Sende-Anforderung die Telefonnummer des Abenders nicht enthält.

43. Computerprogrammprodukt-Code nach Anspruch 39, der weiterhin Computerprogramm-Code zum Speichern der Multimedia-Nachricht in einer zufällig benannten Sitzung des sitzungsbasierten Speichersystems umfasst, wenn der Code auf einem Computer ausgeführt wird und wenn die Telefonnummer des Absenders nicht empfangen wird.

44. Computerprogrammprodukt-Code nach Anspruch 39, der weiterhin Computerprogramm-Code zum Bewegen der Multimedia-Nachricht von der zufällig benannten Sitzung zu der erforderlichen Sitzung nach dem Empfang der Weiterleitungs-Einzelheiten des Absenders durch einen Empfänger umfasst, wenn der Code auf einem Computer ausgeführt wird.

45. Computerprogrammprodukt-Code nach Anspruch 39, der weiterhin Computerprogramm-Code zur Umwandlung der Multimedia-Nachricht in eine Text-Nachricht umfasst, wenn der Code auf einem Computer ausgeführt wird.

46. Computerprogrammprodukt-Code nach Anspruch 39, der weiterhin Computerprogramm-Code zur Bereitstellung von Mehrwert-Diensten für die Multimedia-Nachricht umfasst, wenn der Code auf einem Computer ausgeführt wird.

47. Computerprogrammprodukt-Code nach Anspruch 39, der weiterhin Computerprogramm-Code zum Senden der Multimedia-Nachricht an zumindest einen Empfänger zu einer von dem Absender spezifizierten Zeit umfasst, wenn der Code auf einem Computer ausgeführt wird.

48. Computerprogrammprodukt-Code nach Anspruch 39, der weiterhin Computerprogramm-Code zur Lieferung einer Gutschrift an den Absender umfasst, wenn der Empfänger die Multimedia-Nachricht des Absenders an einen dritten Teilnehmer weiterleitet, wenn der Code auf einem Computer ausgeführt wird.

49. Computerprogrammprodukt-Code nach Anspruch 39, der weiterhin Computerprogramm-Code zur Feststellung der Art des Gerätes umfasst, das von dem Empfänger verwendet wird, wenn der Code auf einem Computer ausgeführt wird.

## Revendications

1. Système de messagerie multimédia à base de session (106) pour envoyer une alerte d'un message multimédia à partir d'un expéditeur à au moins un destinataire, le système de messagerie multimédia à base de session comprenant :
• une logique de réception (302) adaptée pour recevoir une demande d'envoi correspondant à un message multimédia à partir d'un expéditeur, dans lequel la demande d'envoi comprend une identification d'une session dans laquelle le message multimédia est à stocker ;
• un système de stockage à base de session (304) adapté pour stocker le message multimédia dans la session indiquée par la demande d'envoi ; et
• une logique de notification (306) adaptée pour envoyer une alerte du message multimédia à au moins un destinataire, l'alerte comprenant des détails d'identification du message multimédia stocké,
et dans lequel l'alerte comprend une logique de message remplaçable (308) pour écraser le type de message d'une alerte précédente par le type de message de l'alerte correspondant au même expéditeur, résultant ainsi en une alerte unique présente dans le combiné d'un destinataire correspondant à une pluralité de messages multimédia envoyés par l'expéditeur.

2. Système selon la revendication 1, dans lequel l'alerte est une alerte SMS.

3. Système selon la revendication 1, dans lequel l'alerte est une alerte MMS.

4. Système selon la revendication 1, dans lequel l'alerte est audible.

5. Système selon la revendication 1, dans lequel le système de stockage à base de session comprend une nouvelle session pour stocker un message multimédia reçu par la demande d'envoi contenant un premier code prédéfini.

6. Système selon la revendication 1, dans lequel le système de stockage à base de session comprend une session active pour stocker une réponse à un message multimédia reçu par la demande d'envoi contenant un second code prédéfini.

7. Système selon la revendication 1, dans lequel le système de stockage à base de session comprend au moins une session vocale pour stocker des messages SMS vocaux.

8. Système selon la revendication 1, dans lequel le système de stockage à base de session comprend au moins une session vidéo pour stocker des messages SMS vidéo.

9. Système selon la revendication 1, dans lequel le message multimédia comprend un d'un message SMS vocal.

10. Système selon la revendication 1, dans lequel le message multimédia comprend un d'un message SMS vidéo.

11. Système selon la revendication 1, dans lequel les détails d'identification dans l'alerte comprennent au moins un d'un type de média du message multimédia, et d'un numéro de l'expéditeur.

12. Système selon la revendication 11, dans lequel le type de média est sélectionné à partir d'un groupe se composant de voix, de texte et de vidéo.

13. Système selon la revendication 1, comprenant en outre une logique d'invitation (310) demandant à l'expéditeur d'inclure son numéro de téléphone dans le message multimédia, si la demande d'envoi ne contient pas le numéro de téléphone de l'expéditeur.

14. Système selon la revendication 1, dans lequel le système de stockage à base de session stocke le message multimédia dans une session nommée aléatoirement, si le numéro de téléphone de l'expéditeur n'est pas reçu.

15. Système selon la revendication 14, dans lequel le système de stockage à base de session stocke le message multimédia dans la session requise après réception des détails d'envoi de l'expéditeur à partir d'un destinataire.

16. Procédé pour envoyer une alerte d'un message multimédia à partir d'un expéditeur à au moins un destinataire via un système de messagerie multimédia à base de session, le procédé comprenant :
• la réception d'une demande d'envoi correspondant au message multimédia à partir de l'expéditeur (502), dans lequel la demande d'envoi comprend une identification d'une session dans laquelle le message multimédia est à stocker ;
• le stockage du message multimédia dans la session d'un système de stockage à base de session indiqué par la demande d'envoi (504) ; et
• l'envoi d'une alerte du message multimédia à au moins un destinataire (506), l'alerte comprenant des détails d'identification du message multimédia stocké,
et dans lequel l'alerte comprend une logique de message remplaçable (308) pour écraser le type de message d'une alerte précédente par un type de message de l'alerte correspondant au même expéditeur, résultant ainsi en une alerte unique présente dans le combiné d'un destinataire correspondant à la pluralité de messages multimédia envoyés par l'expéditeur.

17. Procédé selon la revendication 16, dans lequel l'alerte est une alerte SMS.

18. Procédé selon revendication 16, dans lequel l'alerte est une alerte MMS.

19. Procédé selon la revendication 16, dans lequel l'alerte est audible.

20. Procédé selon la revendication 16, dans lequel le stockage comprend le stockage du message multimédia dans une nouvelle session du système de stockage à base de session, si la demande d'envoi contient un premier code prédéfini.

21. Procédé selon la revendication 16, dans lequel le stockage comprend un stockage du message multimédia dans une session existante du système de stockage à base de session, si la demande d'envoi contient un second code prédéfini.

22. Procédé selon la revendication 16, dans lequel le stockage comprend le stockage de messages SMS vocaux dans au moins une session vocale du système de stockage à base de session.

23. Procédé selon la revendication 16, dans lequel le stockage comprend le stockage de message SMS vidéo dans au moins une session vidéo du système de stockage à base de session.

24. Procédé selon la revendication 17, dans lequel l'alerte unique correspond à une pluralité de messages SMS vocaux envoyés par l'expéditeur.

25. Procédé selon la revendication 16, dans lequel les détails d'identification dans l'alerte comprennent au moins un d'un type de média du message multimédia, et du numéro d'expéditeur.

26. Procédé selon la revendication 25, dans lequel le type de média est sélectionné à partir d'un groupe se composant de voix, de texte et de vidéo.

27. Procédé selon la revendication 16, comprenant en outre une demande à l'expéditeur d'inclure son numéro de téléphone dans le message multimédia, si la demande d'envoi ne contient pas le numéro de téléphone de l'expéditeur.

28. Procédé selon la revendication 26, comprenant en outre le stockage des messages multimédia dans une session nommée aléatoirement du système de stockage à base de session, si le numéro de téléphone de l'expéditeur n'est pas reçu.

29. Procédé selon la revendication 16, comprenant en outre le déplacement du message multimédia à partir de la session nommée aléatoirement à la session requise après réception des détails d'envoi de l'expéditeur à partir d'un destinataire.

30. Procédé selon la revendication 16, dans lequel le message multimédia comprend un d'un message SMS vidéo, et d'un message SMS vocal.

31. Procédé selon la revendication 16, comprenant en outre la conversion du message multimédia dans un message de texte.

32. Procédé selon la revendication 16, comprenant en outre la fourniture de services à valeur ajoutée au message multimédia.

33. Procédé selon la revendication 16, comprenant en outre l'envoi du message multimédia à au moins un destinataire à la fois spécifié par l'expéditeur.

34. Procédé selon la revendication 16, comprenant en outre la fourniture d'un crédit à l'expéditeur lorsque le destinataire envoie le message multimédia d'expéditeur à une partie tierce.

35. Procédé selon la revendication 16, comprenant en outre la détection du type de dispositif utilisé par le destinataire.

36. Procédé selon la revendication 35, dans lequel le type de dispositif est sélectionné à partir d'un groupe se composant d'un téléphone de ligne fixe, d'un ordinateur personnel et d'un téléphone mobile.

37. Procédé selon la revendication 35, comprenant en outre la sélection du type d'alerte de notification en fonction du type de dispositif utilisé par le destinataire.

38. Procédé selon la revendication 37, dans lequel le type de l'alerte de notification comprend un élément parmi une alerte SMS, un appel téléphonique, un message instantané, un message WAP, et un email.

39. Code de produit de programme informatique pour envoyer un message multimédia à partir d'un expéditeur à au moins un destinataire via un système de messagerie multimédia à base de session, le produit de programme informatique comprenant :
• un code de programme informatique pour recevoir une demande d'envoi correspondant au message multimédia à partir de l'expéditeur lorsque ledit code est exécuté sur un ordinateur, dans lequel la demande d'envoi comprend une identification d'une session dans laquelle le message multimédia est à stocker ;
• un code de programme informatique pour stocker le message multimédia dans la session d'un système de stockage à base de session indiqué par la demande d'envoi lorsque le code est exécuté sur un ordinateur ;
• un code de programme informatique pour envoyer une alerte SMS du message multimédia à au moins un destinataire lorsque ledit code est exécuté sur un ordinateur, l'alerte SMS comprenant des détails d'identification du message multimédia stocké ; et
• un code de programme informatique pour une alerte SMS remplaçable qui écrase le type de message d'une alerte SMS précédente par le type de message de l'alerte SMS lorsque ledit code est exécuté sur un ordinateur, résultant ainsi en une alerte SMS unique présente dans le combiné du destinataire correspondant à une pluralité de messages SMS vocaux envoyés par l'expéditeur.

40. Code de produit de programme informatique selon la revendication 39, comprenant en outre un code de programme informatique pour stocker le message multimédia dans une nouvelle session du système de stockage à base de session lorsque ledit code est exécuté sur un ordinateur et si la demande d'envoi contient un premier code prédéfini.

41. Code de produit de programme informatique selon la revendication 39, comprenant en outre un code de programme informatique pour stocker le message multimédia dans une session existante du système de stockage à base de session lorsque ledit code est exécuté sur un ordinateur et si la demande d'envoi contient un second code prédéfini.

42. Code de produit de programme informatique selon la revendication 39, comprenant en outre un code de programme informatique pour demander à l'expéditeur d'inclure son numéro de téléphone dans le message multimédia lorsque ledit code est exécuté sur un ordinateur et si la demande d'envoi ne contient pas le numéro de téléphone de l'expéditeur.

43. Code de produit de programme informatique selon la revendication 39, comprenant en outre un code de programme informatique pour stocker le message multimédia dans une session nommée aléatoirement du système de stockage à base de session lorsque ledit code est exécuté sur un ordinateur et si le numéro de téléphone de l'expéditeur n'est pas reçu.

44. Code de produit de programme informatique selon la revendication 39, comprenant en outre un code de programme informatique pour déplacer le message multimédia à partir de la session nommée aléatoirement à la session requise après réception des détails d'envoi de l'expéditeur à partir d'un destinataire lorsque ledit code est exécuté sur un ordinateur.

45. Code de produit de programme informatique selon la revendication 39, comprenant en outre un code de programme informatique pour convertir le message multimédia en un message de texte lorsque ledit code est exécuté sur un ordinateur.

46. Code de produit de programme informatique selon la revendication 39, comprenant en outre un code de programme informatique pour fournir des services à valeur ajoutée au message multimédia lorsque ledit code est exécuté sur un ordinateur.

47. Code de produit de programme informatique selon la revendication 39, comprenant en outre un code de programme informatique pour envoyer le message multimédia à au moins un destinataire à un moment spécifié par l'expéditeur lorsque ledit code est exécuté sur un ordinateur.

48. Code de produit de programme informatique selon la revendication 39, comprenant en outre un code de programme informatique pour fournir un crédit à l'expéditeur lorsque le destinataire envoie le message multimédia d'expéditeur à une partie tierce lorsque ledit code est exécuté sur un ordinateur.

49. Code de produit de programme informatique selon la revendication 39, comprenant en outre un code de programme informatique pour détecter le type de dispositif utilisé par le destinataire lorsque ledit code est exécuté sur un ordinateur.
